# EUROPEAN PATENT APPLICATION

(11) **EP 4 480 857 A1**
(43) Date of publication of application: **25.12.2024**
(21) Application number: 23755725.1
(22) Date of filing: 08.02.2023
(51) Int. Cl.: B65G 1/04, B65G 1/137

(54) **WAREHOUSING SYSTEM AND CONTROL METHOD THEREFOR**

(30) Priority: 15.02.2022 CN 202210138889; 18.08.2022 CN 202210993551
(71) Applicant: Beijing Geekplus Technology Co. Ltd, Beijing 100102 (CN)
(72) Inventor: LI, Hongbo, Beijing 100102 (CN); JIA, Haosen, Beijing 100102 (CN); ZHAO, Zhen, Beijing 100102 (CN)
(74) Representative: Habermann, Hruschka & Schnabel
(86) International application number: PCT/CN2023/075049
(87) International publication number: WO 2023/155722

(57) **Abstract**

A warehousing system and a control method therefor. An inventory area of the system is used for storing carriers, and storage positions of the carriers are used for storing containers; a control server is configured to be used for generating a goods sorting instruction and an order picking instruction and updating inventory information; a carrying device is configured to carry, according to the goods sorting instruction of the control server, at least two containers which have order relevance and are stored on different carriers to a same target carrier; when a picking order received by the warehousing system includes at least two containers that have been performed with goods sorting, the warehousing system can directly carry the containers from the target carrier to a work station area for corresponding operation, and the step in the prior art that the carrying device reciprocates between different carriers, or the step that the containers are respectively taken out and placed for operation after different carriers are carried to the work station area is omitted, thereby greatly improving the operation efficiency of the warehousing system.

## Description

### CROSS-REFERENCE TO RELATED APPLICATIONS

This application claims priority to Chinese Patent Application No. 202210138889.4, entitled "Warehousing System and Control Method therefor" filed with the China National Intellectual Property Administration on February 15, 2022, and Chinese Patent Application No. 202210993551.7, entitled "Warehousing System" filed with the China National Intellectual Property Administration on August 18, 2022, which are incorporated by reference in their entireties.

### TECHNICAL FIELD

The present disclosure relates to the technical field of warehousing systems, in particular to a warehousing system and a control method therefor.

### BACKGROUND

A variety of goods may be generally hit on an order received by an existing warehousing system. The goods will be stored in different containers, and the containers may be stored on a plurality of carriers respectively.

The warehousing system controls, according to the content of the order, a carrying device to reciprocate between different carriers and operation areas such as picking workstations for many times, and to carry different containers for storing the goods to the operation areas for corresponding operation.

It can be seen that in order for the existing warehousing system to complete picking for an order, a container loading and unloading device is required to carry different containers back and forth between a plurality of carriers, which has the problem of low operation efficiency.

### SUMMARY

In order to solve the problem of low operation efficiency of an existing warehousing system, the present disclosure provides a warehousing system on the one hand.

The warehousing system of the present disclosure includes:
a work station area;
an inventory area, which is used for storing carriers, storage positions of the carriers being used for storing containers;
a control server, which is configured to be used for generating a goods sorting instruction; and
a carrying device, which is configured to carry, according to the goods sorting instruction, at least two containers which have order relevance and are stored on different carriers to a same target carrier.

In one embodiment for the warehousing system of the present disclosure, the control server is further configured to generate an order picking instruction. The order picking instruction includes the at least two containers that have been performed with goods sorting.

The carrying device is further configured to take out, according to the order picking instruction, at least two containers on the target carrier and place them in the work station area.

In one embodiment for the warehousing system of the present disclosure, the carrying device is configured to: transfer, when being required to carry one container according to the goods sorting instruction, the container to a free storage position of the target carrier;
or, exchange the container with another container on the target carrier.

In one embodiment for the warehousing system of the present disclosure, the carrying device is configured to: transfer, when being required to carry a plurality of containers according to the goods sorting instruction, the plurality of containers to free storage positions of the target carrier respectively;
or, exchange the plurality of containers with other containers on the target carrier;
or, transfer some of the plurality of containers to free storage positions of the target carrier and exchange others of the plurality of containers with other containers on the target carrier.

In one embodiment for the warehousing system of the present disclosure, the carrying device selects, according to the goods sorting instruction, a carrier where one of the at least two containers is located as the target carrier.

In one embodiment for the warehousing system of the present disclosure, when the carrier is a fixed carrier, the carrying device includes:
a movable container carrying device, which is configured to take out, in the inventory area according to the goods sorting instruction, the at least two containers from the current carriers where they are respectively located and place them onto the target carrier; and/or
the movable container carrying device is further configured to take out, in the inventory area according to the order picking instruction, the at least two containers on the target carrier, and move from the inventory area to the work station area for picking.

In one embodiment for the warehousing system of the present disclosure, when the carrier is a movable carrier, the carrying device includes a fixed container carrying device and a carrier carrying device. The movable carrier includes a plurality of placement positions, and the placement positions are used for placement of containers that are used for storing goods.

The carrier carrying device is configured to carry, according to the goods sorting instruction, current carriers storing at least two containers respectively and a target carrier from the inventory area to the work station area.

The fixed container carrying device is arranged in the work station area, and configured to take out, according to the goods sorting instruction, at least two containers from current carriers where they are respectively located and place them onto the target carrier; and/or
the fixed container carrying device is further configured to take out, according to the order picking instruction, at least two containers from the target carrier for picking.

In one embodiment for the warehousing system of the present disclosure, when the carrier is a movable carrier, the movable carrier includes a plurality of placement positions, and the placement positions are used for placement of containers that are used for storing goods. The carrying device includes:
a carrier carrying device, which is configured to carry, according to the goods sorting instruction, current carriers storing at least two containers respectively from the inventory area to the work station area;
a fixed container carrying device, which is arranged in the work station area, and configured to select, according to the goods sorting instruction, one current carrier as a target carrier, take out containers on the remaining current carriers and place the containers onto the target carrier; and/or
the fixed container carrying device is further configured to take out, according to the order picking instruction, at least two containers from the target carrier for picking.

In one embodiment for the warehousing system of the present disclosure, when the target carrier is a movable carrier, the carrying device includes:
a movable container carrying device, which is configured to carry, in the inventory area, the at least two containers from current carriers where they are respectively located to the target carrier; and
a carrier carrying device, which is configured to carry the target carrier from the inventory area to the work station area for picking.

In one embodiment for the warehousing system of the present disclosure, the carrier carrying device is further configured to carry, the current carriers from the work station area to the inventory area after completion of goods sorting; and/or
the carrier carrying device is further configured to carry, the target carrier from the work station area to the inventory area after completion of goods sorting.

In one embodiment for the warehousing system of the present disclosure, the warehousing system further includes a waiting area.

The control server is further configured to be used for controlling the carrier carrying device to carry at least one pair of carriers selected by the goods sorting instruction.

When one carrier in the at least one pair of carriers selected by the goods sorting instruction arrives at the work station area first, the carrier carrying device carries the carrier arriving at the work station area first to the waiting area to wait for the arrival of the remaining carriers in the at least one pair of carriers selected by the goods sorting instruction.

In one embodiment for the warehousing system of the present disclosure, when the remaining carriers in the at least one pair of carriers selected by the goods sorting instruction arrive at the work station area, the carrier carrying device is controlled to carry the carrier in the waiting area to the work station area.

In one embodiment for the warehousing system of the present disclosure, the fixed container carrying device has a temporary storage mechanism, the temporary storage mechanism has at least one temporary storage position, and the temporary storage position is used for temporarily storing containers.

The control server is further configured to be used for controlling the carrier carrying device to carry one pair of carriers selected by the goods sorting instruction to the work station area.

The fixed container carrying device is further configured to be used for taking out containers on the carriers, placing the containers to the temporary storage position, taking out the containers from the temporary storage position after the target carrier arrives, and placing the containers onto the target carrier.

In one embodiment for the warehousing system of the present disclosure, the fixed container carrying device has a temporary storage mechanism. The temporary storage mechanism has at least one temporary storage position, and the temporary storage position is used for temporarily storing containers.

The fixed container carrying device is configured to temporarily store a container on which a picking operation has been performed to the temporary storage position, take out the container from the temporary storage position after a target carrier for the containers arrives at the work station area, and place the container onto the target carrier.

In one embodiment for the warehousing system of the present disclosure, the carrying device further includes an identification apparatus. The identification apparatus is configured to be used for identifying at least one of the following information:
whether there is a container stored at a storage position of a carrier selected by the goods sorting instruction; or
whether identity information of a container at a storage position of a carrier selected by the goods sorting instruction is consistent with identity information of a container selected by the goods sorting instruction.

In one embodiment for the warehousing system of the present disclosure, the identification apparatus includes a reader, a 2D/3D image acquisition device or a depth information acquisition device.

In one embodiment for the warehousing system of the present disclosure, the control server is configured to generate, according to an identification result of the identification apparatus being exception, an exception handling instruction or issue an alarm signal.

In one embodiment for the warehousing system of the present disclosure, the work station area is docked with a docking device. The docking device includes a conveyor line, and the conveyor line is used for transferring a container to or out of the work station area.

In one embodiment for the warehousing system of the present disclosure, the work station area is provided with a picking workstation. The picking workstation is configured to be used for placement of containers to be picked for picking.

In one embodiment for the warehousing system of the present disclosure, the control server is further configured to update inventory information according to a container on which a picking operation has been performed being empty.

In one embodiment for the warehousing system of the present disclosure, the control server is further configured to update, according to goods remaining in a container on which a picking operation has been performed, the number of goods in the container in current inventory information to a surplus, so as to update inventory information.

In one embodiment for the warehousing system of the present disclosure, the inventory area includes a first area and a second area. A maximum distance from the first area to the work station area is not greater than a first predetermined distance, and a minimum distance from the second area to the work station area is greater than the first predetermined distance.

The control server is configured to acquire a future order and hit at least one of the containers according to the future order. The container that has been hit is denoted as a hit container, and a movable carrier storing the hit container is denoted as a hit carrier.

The carrier carrying device is configured to carry at least one first movable carrier and at least one second movable carrier parked in the inventory area to the same work station area. At least the second movable carrier is a hit carrier.

The fixed container carrying device is configured to place at least one hit container on the at least one second movable carrier onto at least one first movable carrier. The first movable carrier having the hit container placed from the second movable carrier is denoted as a goods-sorted carrier.

The carrier carrying device is configured to carry at least one goods-sorted carrier back to the first area.

In one embodiment for the warehousing system of the present disclosure, the carrier carrying device is configured to carry at least one first movable carrier and at least one second movable carrier parked in the inventory area to the same work station area during non-production time of the work station area.

The fixed container carrying device is configured to place at least one hit container on the at least one second movable carrier onto at least one first movable carrier.

In one embodiment for the warehousing system of the present disclosure, the carrier carrying device is configured to:
carry, when there is a vacant parking position in the first area, the goods-sorted carrier back to the first area; and
carry, when there is no vacant parking position in the first area, a non-goods-sorted carrier in the first area to the second area, and then carry the goods-sorted carrier to the first area.

In one embodiment for the warehousing system of the present disclosure, the future order includes:
an order for generating a production task for a next production period; and/or
an estimated order.

In one embodiment for the warehousing system of the present disclosure, the hit container includes the container for storing hit goods and/or the container for storing goods associated with the hit goods. The hit goods are goods contained in a stock keeping unit (SKU) of the future order.

In one embodiment for the warehousing system of the present disclosure, the control server is configured to determine, according to historical orders, the goods associated with the hit goods.

In one embodiment for the warehousing system of the present disclosure, the control server is configured to distribute all received orders for generating the production task to the work station area in batches.

In one embodiment for the warehousing system of the present disclosure, the control server is configured to estimate orders according to historical orders and/or popularity of the goods.

In one embodiment for the warehousing system of the present disclosure, the first movable carrier is a vacant movable carrier or a hit carrier.

In one embodiment for the warehousing system of the present disclosure, the control server is configured to cause each of the movable carriers to always retain at least one vacant placement position.

In one embodiment for the warehousing system of the present disclosure, the movable carriers each include a plurality of carrier surfaces, and the control server is configured to cause each carrier surface of each movable carrier to always retain at least one vacant placement position.

In one embodiment for the warehousing system of the present disclosure, the fixed container carrying device is configured to place the hit container that is on the at least one second movable carrier onto at least one first movable carrier such that all containers on the at least one first movable carrier are hit containers.

In one embodiment for the warehousing system of the present disclosure, the work station area further includes a temporary storage position. The temporary storage position is used for placement of the containers. The fixed container carrying device is configured to at least transfer the containers between the placement position and the temporary storage position.

In one embodiment for the warehousing system of the present disclosure, the work station area further includes:
a support frame; and
at least one guide mechanism, which is arranged onto the support frame, the guide mechanism being transversely movable and vertically movable relative to the support frame, where a container taking and placing apparatus is arranged onto the guide mechanism, and the temporary storage position is arranged onto the support frame.

In one embodiment for the warehousing system of the present disclosure, the guide mechanism includes:
a transverse moving apparatus, which is arranged onto the support frame, the transverse moving apparatus being coupled to a control apparatus and transversely movable relative to the support frame, where the control apparatus is coupled to the work station area and the carrier carrying device to control working of the work station area and the carrier carrying device;
a moving rod, which is extended in a vertical direction, the moving rod being arranged onto the transverse moving apparatus such that the moving rod is transversely movable relative to the support frame; and
a vertical moving apparatus, which is arranged onto the moving rod, the vertical moving apparatus being coupled to the control apparatus and vertically movable relative to the moving rod.

The container taking and placing apparatus is arranged onto the vertical moving apparatus.

In one embodiment for the warehousing system of the present disclosure, the carrier carrying device is configured to first carry one selected from the first movable carrier and the second movable carrier to the same work station area.

The fixed container carrying device is configured to place, to the temporary storage position, the container thereon to be exchanged to the other selected from the first movable carrier and the second movable carrier.

The carrier carrying device is configured to carry the one selected from the first movable carrier and the second movable carrier back to the inventory area.

The carrier carrying device is configured to carry the other selected from the first movable carrier and the second movable carrier to the same work station area.

The fixed container carrying device is configured to place, thereon from the temporary storage position, the container to be exchanged thereto.

On the other hand, the present disclosure also provides a control method for a warehousing system. The warehousing system is the warehousing system as described above. The control method includes the following steps:
generating, by the control server, a goods sorting instruction, and sending, by the control server, the goods sorting instruction to the carrying device; and
carrying, by the carrying device according to the goods sorting instruction, at least two containers which have order relevance and are stored on different carriers to a same target carrier.

In one embodiment for the control method of the present disclosure, the control method further includes the following steps:
generating, by the control server, an order picking instruction and sending, by the control server, the order picking instruction to the carrying device; and
taking out, by the carrying device according to the order picking instruction, at least two containers on the target carrier and placing, by the carrying device, the containers in the work station area.

In one embodiment for the control method of the present disclosure, when the carrier is a movable carrier, the carrying, by the carrying device according to the goods sorting instruction, at least two containers which have order relevance and are stored on different carriers to a same target carrier includes:
carrying, by a carrier carrying device according to the goods sorting instruction, current carriers for storing at least two containers respectively and a target carrier from the inventory area to the work station area;
arranging a fixed container carrying device in the work station area, taking out, by the fixed container carrying device according to the goods sorting instruction, at least two containers from current carriers where they are respectively located, and placing them onto the target carrier; and/or
taking out, by the fixed container carrying device according to the order picking instruction, at least two containers from the target carrier for picking.

In one embodiment for the control method of the present disclosure, when the carrier is a movable carrier, the moving, to a same target carrier by the carrying device according to the goods sorting instruction, at least two containers which have order relevance and are stored on different carriers includes:
carrying, by a carrier carrying device according to the goods sorting instruction, current carriers for storing at least two containers respectively from the inventory area to the work station area;
arranging a fixed container carrying device in the work station area, selecting, by the fixed container carrying device according to the goods sorting instruction, one current carrier as a target carrier, taking out, by the fixed container carrying device, containers on the remaining current carriers, and placing, by the fixed container carrying device, the containers onto the target carrier; and/or
taking out, by the fixed container carrying device according to the order picking instruction, at least two containers from the target carrier for picking.

In one embodiment for the control method of the present disclosure, the inventory area includes a first area and a second area. A maximum distance from the first area to the work station area is not greater than a first predetermined distance, and a minimum distance from the second area to the work station area is greater than the first predetermined distance.

The warehousing system is configured to implement the following steps:
acquiring a future order;
hitting at least one of the containers according to the future order, where the container that has been hit is denoted as a hit container and a movable carrier storing the hit container is denoted as a hit carrier;
carrying at least one first movable carrier and at least one second movable carrier that are parked in the inventory area to the same work station area, where at least the second movable carrier is a hit carrier;
placing, in the work station area, at least one hit container on the at least one second movable carrier onto at least one first movable carrier, where the first movable carrier having the hit container placed from the second movable carrier is denoted as a goods-sorted carrier; and
carrying at least one goods-sorted carrier back to the first area.

In one embodiment for the control method of the present disclosure, the carrying at least one first movable carrier and at least one second movable carrier that are parked in the inventory area to the same work station area, placing, in the work station area, at least one hit container on the at least one second movable carrier onto at least one first movable carrier and carrying at least one goods-sorted carrier back to the first area includes:
S 120: carrying one first movable carrier and one second movable carrier parked in the inventory area to the same work station area, and then performing step S130, where the second movable carrier is a hit carrier, and neither the first movable carrier nor the second movable carrier is a goods-sorted carrier;
S130: placing hit containers on the second movable carrier onto the first movable carrier, and then performing step S140;
S140: determining whether there is a hit container remaining on the second movable carrier, if yes, performing step S 150, and if no, performing step S 170;
S150: determining whether the first movable carrier still receives the new hit container, if yes, performing step S130, and if no, performing step S 160;
S 160: carrying the first movable carrier back to the inventory area, and then performing step S200;
S170: carrying the second movable carrier back to the inventory area, and then performing step S 180;
S 180: determining whether there is a hit carrier among non-goods-sorted carriers in the inventory area, if yes, performing step S190, and if no, performing step S220;
S 190: carrying one hit carrier among the non-goods-sorted carriers in the inventory area to the same work station area, taking the hit carrier as the second movable carrier, and then performing step S130;
S200: determining whether there is a hit carrier among the non-goods-sorted carriers in the inventory area, if yes, performing step S210, and if no, performing step S220;
S210: carrying one hit carrier or one vacant movable carrier among the non-goods-sorted carriers in the inventory area to the same work station area, taking the carrier as the first movable carrier, and then performing a step; and
S220: carrying the movable carrier at the same work station area back to the inventory area.

In one embodiment for the control method of the present disclosure, in at least one selected from step S120, step S190, and step S210, the warehousing system is configured to:
calculate a container index of each hit container on the non-goods-sorted carriers among the hit carriers in the inventory area, and determine, according to the container index, the non-goods-sorted carriers carried to the same work station area, where the container index is the number of future orders that hit the containers among all the future orders.

In one embodiment for the control method of the present disclosure, in at least one selected from step S120, step S190, and step S210, the warehousing system is configured to:
calculate a carrier index of each non-goods-sorted carrier among the hit carriers parked in the inventory area, and take the non-goods-sorted carrier with the maximum carrier index as the first movable carrier or the second movable carrier, where the carrier index is a sum of the container indexes of all the hit containers on the hit carriers; or
take the non-goods-sorted carrier placed with the hit container with the maximum container index among the non-goods-sorted carriers among the hit carriers parked in the inventory area as the first movable carrier or the second movable carrier.

In one embodiment for the control method of the present disclosure, in step S120,
a control apparatus first determines the same work station area, where the control apparatus is coupled to the work station area and the carrier carrying device to control working of the work station area and the carrier carrying device; and
when there are at least three non-goods-sorted carriers among the hit carriers parked in the inventory area, two non-goods-sorted carriers with a minimum moving path of moving to the same work station area are moved to the same work station area.

In one embodiment for the control method of the present disclosure, in step S120,
a control apparatus first determines the two movable carriers to be carried from the inventory area, where the control apparatus is coupled to the work station area and the carrier carrying device to control working of the work station area and the carrier carrying device; and
when the plurality of work station areas are free, the control apparatus respectively calculates a sum of lengths of moving paths in which the two movable carriers to be carried from the inventory area are moved to each of the plurality of free work station areas, and takes the work station area with the minimum sum of lengths of the moving paths as the same work station area.

In one embodiment for the control method of the present disclosure, the future order is an order to be processed in a next production period, and the first movable carrier is a hit carrier.

In step S130, the warehousing system is configured to determine the work station area associated with the first movable carrier in the next production period, and preferentially exchange a hit container that is on the second movable carrier and is associated with the work station area associated with the first movable carrier to the first movable carrier.

In one embodiment for the control method of the present disclosure, the future order is an order to be processed in the next production period, and the first movable carrier is a hit carrier.

In step S130, the warehousing system is configured to determine the future order associated with the first movable carrier in the next production period, and preferentially exchange a hit container that is on the second movable carrier and is associated with the future order associated with the first movable carrier to the first movable carrier.

In one embodiment for the control method of the present disclosure, the movable carrier includes a plurality of carrier surfaces. The warehousing system is configured to cause each carrier surface of the movable carrier to always retain at least one vacant placement position.

In the step, the placing hit containers on the second movable carrier onto the first movable carrier includes:
placing the hit containers on the second movable carrier onto the first movable carrier when each of the carrier surfaces of the first movable carrier has a vacant placement position and at least one of the carrier surfaces of the first movable carrier has a plurality of vacant placement positions;
   or
exchanging non-hit containers on the first movable carrier with the hit containers on the second movable carrier when each of the carrier surfaces of the first movable carrier has only one vacant placement position.

In step S150, the determining whether the first movable carrier still receives the new hit container includes:
determining whether there is a non-hit container remaining on the first movable carrier or whether there are a plurality of vacant placement positions on at least one of the carrier surfaces of the first movable carrier.

In one embodiment for the control method of the present disclosure, in step S130, the placing hit containers on the second movable carrier onto the first movable carrier includes:
placing the hit containers on the second movable carrier onto the first movable carrier when the first movable carrier has a vacant placement position;
   or
exchanging non-hit containers on the first movable carrier with the hit containers on the second movable carrier when the first movable carrier has no vacant placement position;

In step S150, the determining whether the first movable carrier still receives the new hit container includes:
determining whether there is a non-hit container remaining on the first movable carrier or whether there is a vacant placement position on the first movable carrier.

The warehousing system of the present disclosure first performs a goods sorting operation: storing, to a same target carrier, at least two containers which have order relevance and are stored on different carriers.

Thus, when a picking order received by the warehousing system includes at least two containers that have been performed with goods sorting, the warehousing system can directly carry the containers from the target carrier to a work station area for corresponding operation, and the step in the prior art that the carrying device reciprocates between different carriers, or the step that the containers are respectively taken out and placed for operation after different carriers are carried to the work station area is omitted, thereby greatly improving the operation efficiency of the warehousing system.

The warehousing system of the present disclosure can also implement a picking operation: directly carrying the at least two containers that have been performed with goods sorting in the picking order from the same carrier to the work station area for corresponding operation. The step in the prior art that the carrying device reciprocates between different carriers, or the step that the containers are respectively taken out and placed for operation after different carriers are carried to the work station area is omitted, thereby further greatly improving the operation efficiency of the warehousing system.

### BRIEF DESCRIPTION OF THE DRAWINGS

The accompanying drawings, which are incorporated in and constitute a part of this specification, illustrate embodiments of the present disclosure and, together with the description, serve to explain the principles of the present disclosure.
FIG. 1 is a structural block diagram of one embodiment for a warehousing system of the present disclosure.
FIG. 2 is a schematic structural diagram of one embodiment for a carrying device of the present disclosure.
FIG. 3 is a schematic structural diagram of another embodiment for a carrying device of the present disclosure.
FIG. 4 is a control flow chart of a control method for a warehousing system of the present disclosure.
FIG. 5 is a schematic structural diagram of a warehousing system according to a preferred implementation of this application.
FIG. 6 is a partial stereogram of a warehousing system according to a preferred implementation of this application, where a work station is shown.
FIG. 7 is a workflow chart of a warehousing system according to a preferred implementation of this application.
FIG. 8 is a flow chart of specific exemplary working steps of steps S30 to S50 in FIG. 7.

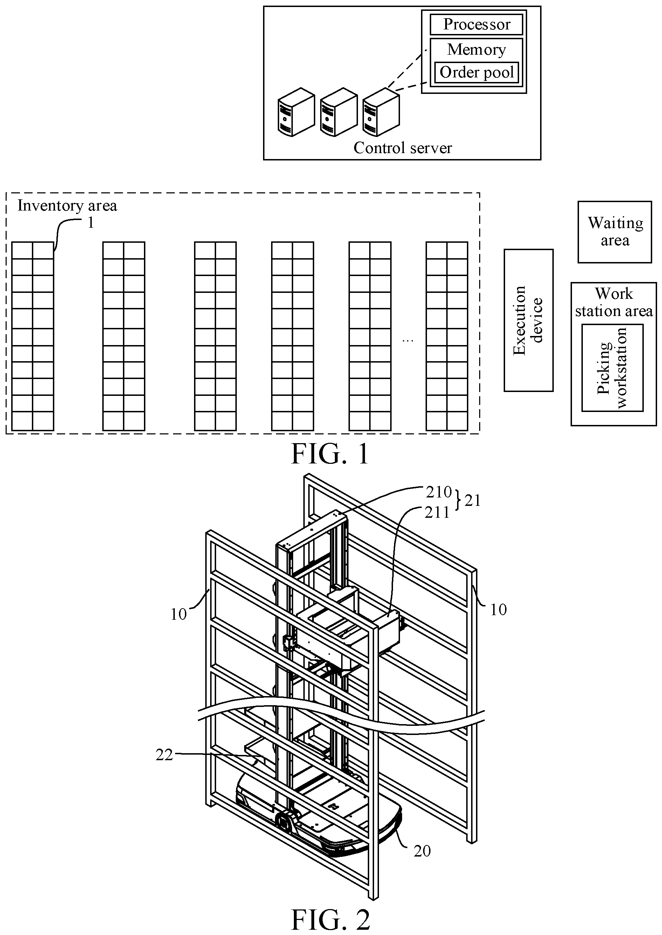

The one-to-one correspondence between component names and reference numerals in FIG. 1 to FIG. 3 is as follows:
1: carrier; 10: fixed carrier; 11/11A/11B: movable carrier; 111: carrier surface; 115: placement position; 20: movable container carrying device; 21: first container taking and placing mechanism; 210: bracket; 211: first container taking and placing assembly; 22: temporary storage position; 30: carrier carrying device; 31: fixed container carrying device; 310: portal frame; 311: second container taking and placing assembly; 312: guide mechanism; 313: transverse moving apparatus; 314: moving rod; 315: vertical moving apparatus; 40: inventory area; 410: first area; 420: second area; 50: container; 60: work station area; 610: picking workstation; 620: waiting area; and 100: warehousing system.

### DETAILED DESCRIPTION

Various exemplary embodiments of the present disclosure will be described in detail below with reference to the accompanying drawings. It should be noted that relative arrangements, numeric expressions, and numerical values of components and steps set forth in these embodiments do not limit the scope of the present disclosure unless otherwise specified.

The following description for at least one exemplary embodiment is in fact illustrative only and is in no way intended to limit the present disclosure and the application or uses thereof.

Technologies, methods, and devices known to those of ordinary skill in the art may not be discussed in detail, but where appropriate, such technologies, methods, and devices should be regarded as part of the specification.

In all examples shown and discussed herein, any specific value should be interpreted as being exemplary only and not as a limitation. Therefore, other examples of exemplary embodiments may have different values.

It should be noted that like numerals and letters denote like terms in the following drawings, and therefore, once a term is defined in one drawing, the term does not need to be further discussed in subsequent drawings.

An order involved in a warehousing system, such as a picking order, contains a variety of goods, which are placed in different containers respectively, and the containers are stored on different carriers. The carrier includes a fixed carrier and a movable carrier. The fixed carrier generally includes a partition carrier, which is fixedly arranged on the floor of a warehouse and cannot be moved. The movable carrier can be moved by a carrier carrying device to move between various areas of the warehouse. The movable carrier includes a plurality of placement positions. The placement positions are used for placement of containers that are used for storing goods.

When the warehousing system receives a picking order, if a plurality of containers hit by the picking order are stored on different fixed carriers respectively, a control server controls the carrying device to reciprocate between different carriers and a work station area for many times, so as to carry all the containers hit by the picking order to the work station area for picking.

If a plurality of containers hit by the picking order are stored on different movable carriers respectively, the server controls the carrier carrying device to carry the movable carriers to the work station area respectively, and then controls a container loading and unloading device to carry the containers on each movable carrier to the work station area for picking.

Obviously, when an existing control method for a warehousing system processes a picking order, no matter whether hit containers are stored on a fixed carrier or a movable carrier, the step of acquiring different containers from different carriers will be involved, and there are problems of high time consumption, cumbersome operation and low efficiency in the picking process.

In order to solve the above-mentioned technical problems, the present disclosure provides a warehousing system. The warehousing system includes an inventory area, a work station area, containers, carriers, a carrying device, and a control server. The inventory area is used for storing the carriers. Storage positions of the carriers are used for storing the containers. The control server is configured to be used for generating a goods sorting instruction. The carrying device is configured to move, to a same target carrier according to the goods sorting instruction of the control server, at least two containers which have order relevance and are stored on different carriers.

It should be noted that the order relevance includes an order hit rate. The order hit rate refers to a ratio between an order volume of target goods being hit and a total order volume within a preset time period. For example, the volume of orders which are received within a day and in which first target goods (cola) are hit is 100, the volume of received orders in which second target goods (popcorn) are hit is 90, and the total order volume within the day is 1000. Then, the order hit rate of the first target goods is 10%, and the order hit rate of the second target goods is 9%.

In the warehousing system of the present disclosure, when the order hit rates of goods distributed in at least two containers reach a preset threshold, it is indicated that the at least two containers have order relevance. For example, if the control server presets the preset threshold of the order hit rate to be 8%, it is indicated that the order hit rates of the first target goods and the second target goods reaches the preset threshold. That is, the order relevances of both a first container for storing the first target goods and a second container for storing the second target goods reach the preset threshold.

In the warehousing system of the present disclosure, when two or more goods distributed in at least two containers are matched products or hit by a plurality of orders at the same time, it may be indicated that the at least two containers have order relevance. For example, the goods are nail polish and nail polish remover, shampoo and conditioner, and the like.

The warehousing system of the present disclosure first performs a goods sorting operation: storing, to a same target carrier, at least two containers which have order relevance and are stored on different carriers.

Thus, when a picking order received by the warehousing system includes at least two containers that have been performed with goods sorting, the warehousing system can directly carry the containers from the target carrier to a work station area for corresponding operation, and the step in the prior art that the carrying device reciprocates between different carriers, or the step that the containers are respectively taken out and placed for operation after different carriers are carried to the work station area is omitted, thereby greatly improving the operation efficiency of the warehousing system.

The control server of the warehousing system of the present disclosure is further configured to generate an order picking instruction. The carrying device is further configured to take out, according to the order picking instruction, at least two containers on the target carrier and place them in the work station area. The order picking instruction includes the at least two containers that have been performed with goods sorting.

The warehousing system of the present disclosure can also implement a picking operation: preferentially selecting an order that hits the at least two containers at the same time to generate an order picking instruction when picking and dispatching orders, and then carrying the at least two containers from the target carrier to the work station area according to the order picking instruction. The step in the prior art that the carrying device reciprocates between different carriers, or the step that the containers are respectively taken out and placed for operation after different carriers are carried to the work station area is omitted, thereby further greatly improving the operation efficiency of the warehousing system.

That is, the warehousing system of the present disclosure can only implement a goods sorting operation, or can implement both a goods sorting operation and a picking operation. Those skilled in the art can select an appropriate function according to an actual application scenario.

In order to facilitate understanding, the warehousing system of the present disclosure will be explained in detail with a specific embodiment as an example in conjunction with FIG. 1 to FIG. 4, and in order to keep the text concise, a control method for the warehousing system will be described together with the warehousing system herein, and the control method therefor will not be explained separately.

The warehousing system of the present disclosure at least includes a work station area, an inventory area, carriers, containers, a carrying device, and a control server.

The inventory area may be a dense storage area or a non-dense storage area. A plurality of carriers are arranged in the inventory area. The carriers are used for storing the containers and usually include fixed carriers and movable carriers. The fixed carrier generally includes a partition carrier, which is fixedly arranged on the floor of a warehouse and cannot be moved. The movable carrier can be moved by a carrier carrying device to move between various areas of the warehouse.

From the perspective of storage functions, the containers include general-purpose containers and special-purpose containers. The general-purpose containers refer to containers capable of storing any goods, such as storage boxes and organizing boxes. The special-purpose containers refer to containers specially used for placement of a certain type of goods, such as shoe boxes, fresh food boxes, and buckets. From the perspective of material, the containers include cartons, glass bottles, plastic boxes, metal boxes, leather boxes, and the like.

The work station area is an area in the warehouse that is different from the inventory area.

The control server communicates with the carrying device in a wired or wireless manner, and a worker operates the control server through a console. The control server is a software system which runs on a server and has data storage and information processing capabilities, and may be connected to a software system of the carrying device wirelessly. The control server may include one or more servers, and may be a centralized control architecture or a distributed computing architecture. The control server has a processor and a memory. An order pool may be provided in the memory. Order information is stored in the order pool.

The control server is configured to be used for generating a goods sorting instruction and an order picking instruction and/or updating inventory information.

According to one embodiment of the present disclosure, the control server of the present disclosure selects, according to information such as historical orders, at least two containers which have order relevance and are stored on different carriers to generate a goods sorting instruction, so as to complete goods sorting before dispatching a picking order that hits relevant containers, thereby storing the at least two containers which have order relevance on a same target carrier as much as possible.

According to one embodiment of the present disclosure, the control server of the present disclosure also selects an order that hits at least two containers involved in the goods sorting instruction at the same time to generate an order picking instruction, so as to preferentially select an order that have been performed with goods sorting for dispatch, for picking manually or by a picking device, and to update inventory information according to a picking result.

The carrying device is configured to move, to a same target carrier according to the goods sorting instruction of the control server, at least two containers which have order relevance and are stored on different carriers, so as to complete goods sorting.

According to one embodiment of the present disclosure, when a container needs to be moved according to the goods sorting instruction and there is a free storage position on the target carrier, the carrying device is configured to transfer, to the free storage position on the target carrier according to the goods sorting instruction, the container to be moved.

According to one embodiment of the present disclosure, when a container needs to be moved according to the goods sorting instruction and there is no free storage position on the target carrier, the carrying device is configured to exchange, according to the goods sorting instruction, the container to be moved with another container on the target carrier.

According to one embodiment of the present disclosure, when a plurality of containers need to be moved according to the goods sorting instruction and there are free storage positions on the target carrier, the carrying device is configured to transfer, to the corresponding free storage positions on the target carrier according to the goods sorting instruction, the plurality of containers to be moved.

According to one embodiment of the present disclosure, when a plurality of containers need to be moved according to the goods sorting instruction and there is no free storage position on the target carrier, the carrying device is configured to exchange, according to the goods sorting instruction, the plurality of containers to be moved with other containers on the target carrier.

According to one embodiment of the present disclosure, when a plurality of containers need to be moved according to the goods sorting instruction and there are free storage positions on the target carrier, the carrying device is configured to transfer, to the corresponding free storage positions on the target carrier according to the goods sorting instruction, some of the containers to be moved, and to exchange the other containers to be moved with other containers on the target carrier.

It should be noted that the carrying device exchanges containers to be moved with other containers on the target carrier by: first, taking out other containers on the target carrier by the carrying device, and placing the containers onto temporary storage positions; then, taking out containers to be moved from current carriers, and placing the containers onto free storage positions on the target carrier; and finally, placing the containers on the temporary storage positions onto the carriers where the moved containers are originally located.

The temporary storage positions may be temporary storage positions on a temporary storage mechanism of the carrying device or temporary storage positions on a docking mechanism of the work station area independent of the carrying device. The docking mechanism may be any carrier or bracket capable of storing containers. The temporary storage positions may also be areas independent of the work station area.

The other containers used for exchange in the warehousing system are containers which do not have order relevance.

According to one embodiment of the present disclosure, a particular carrier may be selected in the goods sorting instruction of the present disclosure as a target carrier. The target carrier does not belong to a current carrier where any one of at least two containers selected in the goods sorting instruction is located.

According to one embodiment of the present disclosure, a target carrier selected in the goods sorting instruction of the present disclosure is a carrier where any one of at least two containers selected in the goods sorting instruction is located.

Thus, the carrying device only needs to carry the other selected from the at least two containers from the current carrier to the target carrier. Compared with the selection of the particular carrier, the number of movements of the container by the carrying device is reduced, and the goods sorting efficiency is improved.

As previously described, the carrier includes a fixed carrier and a movable carrier. A specific structure and working principle of the carrying device are related to the type of the carrier cooperating therewith. That is, the carrying devices cooperating with the fixed carrier and the movable carrier are different. Two specific embodiments of the carrying device will be respectively described in conjunction with the specific types of the carriers.

According to one embodiment of the present disclosure, referring to FIG. 2, if the target carrier of the warehousing system is a fixed carrier 10, the carrying device cooperating therewith is a movable container carrying device.

The movable container carrying device is configured to take out, in the inventory area according to the goods sorting instruction, at least two containers from current carriers where they are respectively located and place the containers onto the target carrier; and/or the movable container carrying device is further configured to take out, in the inventory area according to the order picking instruction, the at least two containers on the target carrier, and carry from the inventory area to the work station area for picking.

In detail, the movable container device includes a first carrying mechanism 20 and a first container taking and placing mechanism 21. It should be noted that only a side bracket of the fixed carrier is shown in FIG. 2 in order to facilitate the full view of the movable container carrying device, and a partition of the fixed carrier and other structures are omitted.

The first carrying mechanism 20 is configured to drive the first container taking and placing mechanism 21 to carry in the inventory area and the work station area. The first container taking and placing mechanism 21 is configured to take out, in the inventory area according to the goods sorting instruction, at least two containers from current carriers where they are respectively located and place the containers onto the target carrier; and/or, the first container taking and placing mechanism 21 is further configured to take out, in the inventory area according to the order picking instruction, the at least two containers on the target carrier, move from the inventory area to the work station area along with the first carrying mechanism 21, and place the at least two containers in the work station area.

In detail, the first container taking and placing mechanism 21 includes a bracket 210 and a first container taking and placing assembly 211 movably arranged on the bracket 210. The bracket 21 is fixedly arranged on the first carrying mechanism 20. The container taking and placing assembly 211 takes out, according to the goods sorting instruction of the control server, a container selected in the goods sorting instruction from a storage position of the carrier selected in the goods sorting instruction, and moves the container to the target carrier selected in the goods sorting instruction.

A specific form of the first container taking and placing assembly 211 is related to the storage position of the fixed carrier. If each partition of the fixed carrier is provided with a storage position of one container in a depth direction, the container taking and placing assembly is a container robot with a single extension position. If each partition of the fixed carrier is provided with storage positions of two containers in the depth direction, the container taking and placing assembly is a container robot with double extension positions. If each partition of the fixed carrier is provided with storage positions of a plurality of containers in the depth direction, the container taking and placing assembly is a container robot with multiple extension positions.

It should be noted that in another embodiment of the present disclosure, the first container taking and placing assembly of the present disclosure takes and places containers by any one of grasping, clamping, sucking, lifting, and hugging.

The first carrying mechanism 20 may be an AGV trolley. The AGV trolley refers to a transport vehicle equipped with an electromagnetic or optical automatic navigation apparatus, which can travel along a prescribed navigation path and has safety protection and various transfer functions. In industrial application, a rechargeable battery serves as a power source of a pilotless carrier vehicle. Generally, the travel path and behavior thereof can be controlled by a computer, or the travel path can be set up by using an electromagnetic path-following system. An electromagnetic track is adhered to the ground. The pilotless carrier vehicle moves through information brought by the electromagnetic track or is navigated by using ground QR codes or simultaneous localization and mapping (SLAM).

The SLAM is also known as concurrent mapping and localization (CML). The problem may be described as: is there a way for a robot to gradually draw a consistent map of this environment while moving if the robot is placed at an unknown position in an unknown environment? The so-called consistent map refers to unhindered travel to every accessible corner of a room.

In practical application, in order to improve the storage and taking efficiency, a temporary storage mechanism 22 may be arranged on the first container taking and placing mechanism. The temporary storage mechanism 22 has at least one temporary storage position, and the temporary storage position is used for caching one container. The temporary storage mechanism 22 enables the carrying device to take and place a plurality of containers at one time, so as to improve the taking and placing efficiency.

For example, during the goods sorting, the container taking and placing assembly 211 may first temporarily store other containers on the target carrier on the temporary storage mechanism 22 to generate free storage positions, then place target containers selected in each goods sorting instruction onto the free storage positions on the target carrier one by one, and finally place the other containers on the temporary storage mechanism 22 onto each storage position of the original carrier for the target containers.

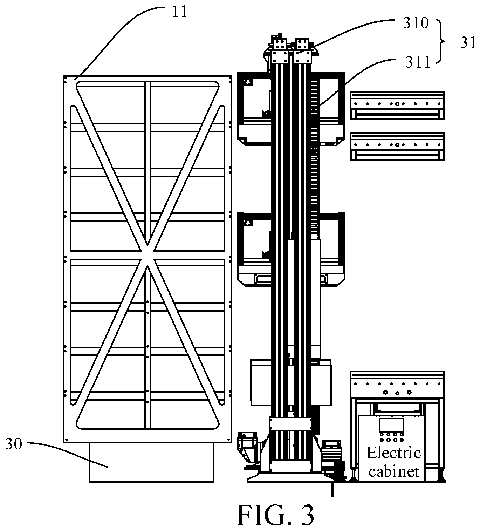

According to one embodiment of the present disclosure, referring to FIG. 3, if the carrier of the present disclosure is a movable carrier 11, the carrying device includes a carrier carrying device 30 and a fixed container carrying device 31.

The carrier carrying device 30 is configured to carry, according to the goods sorting instruction, current carriers for storing at least two containers respectively and a target carrier from the inventory area to the work station area. The fixed container carrying device 31 is arranged in the work station area, and is configured to take out, according to the goods sorting instruction, at least two containers from current carriers where they are respectively located and place the containers onto the target carrier; and/or the fixed container carrying device 31 is further configured to take out, according to the order picking instruction, at least two containers from the target carrier and place them in the work station area. Specifically, the carrier carrying device 30 may be an AGV carrier vehicle, also commonly referred to as an AGV trolley.

According to one embodiment of the present disclosure, if the carrier of the present disclosure is a movable carrier 11, the carrying device includes a carrier carrying device 30 and a fixed container carrying device 31.

The carrier carrying device 30 is configured to carry, according to the goods sorting instruction, current carriers for storing at least two containers respectively from the inventory area to the work station area. The fixed container carrying device 31 is arranged in the work station area, and is configured to select, according to the goods sorting instruction, one current carrier as a target carrier, take out containers on the remaining current carriers and place the containers onto the target carrier; and/or the fixed container carrying device 31 is further configured to take out, according to the order picking instruction, at least two containers from the target carrier and place them in the work station area.

In detail, the fixed container carrying device 31 includes a portal frame 310 and a second container taking and placing assembly 311 moving relative to the portal frame 310 along X, Y, and Z axes of a spatial coordinate system. A direction of a vertical distance between a picking workstation and a carrier is referred to as a Y-axis direction, a direction perpendicular to the Y axis in a horizontal plane is referred to as an X-axis direction, and a direction perpendicular to the horizontal plane is referred to as a Z-axis direction. It can also be understood that the plane where the X axis and Y axis are located is the horizontal plane, and the Z axis is located within a vertical plane.

The portal frame 310 is fixedly arranged on the floor of the work station area by fasteners such as chemical bolts. The second container taking and placing assembly 311 takes out, according to the goods sorting instruction of the control server, a container selected in the goods sorting instruction from a storage position of the carrier selected in the goods sorting instruction, and moves the container to the target carrier selected in the goods sorting instruction.

It should be noted that in another embodiment of the present disclosure, the second container taking and placing assembly of the present disclosure takes and places containers by any one of grasping, clamping, sucking, lifting, and hugging.

According to one embodiment of the present disclosure, when the target carrier is a movable carrier, the carrying device may further include a movable container carrying device and a carrier carrying device. The movable container carrying device is configured to carry, in the inventory area, the at least two containers from current carriers where they are respectively located to the target carrier. The carrier carrying device is configured to carry the target carrier from the inventory area to the work station area for picking.

It should be noted that the specific structures of the movable container carrying device and the carrier carrying device in this embodiment are the same as the relevant content recorded in the previous embodiment, which can be fully realized by those skilled in the art based on this. Therefore, details thereof will not be repeated herein.

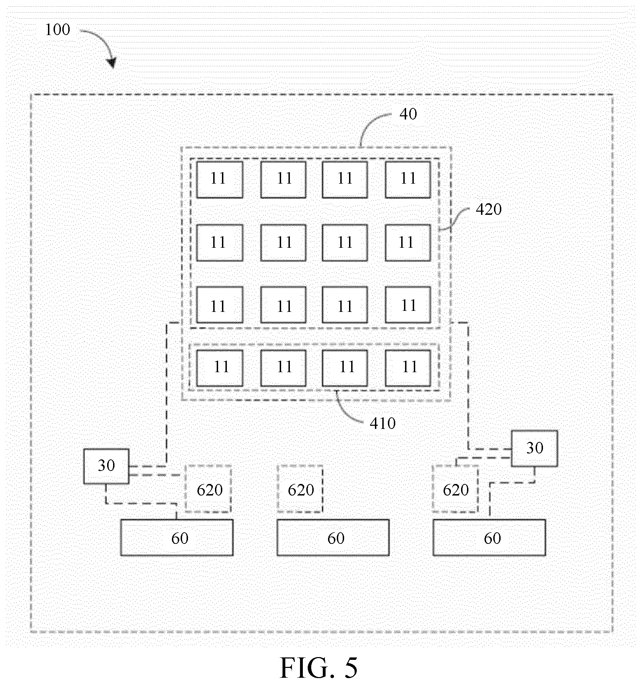

In one embodiment of the present disclosure, if the carrier of the present disclosure is a movable carrier 11, as shown in FIG. 5, in a preferred implementation, the warehousing system 100 includes a plurality of movable carriers 11, an inventory area 40, at least one carrier carrying device 30, at least one work station area 60, and a control apparatus (not shown).

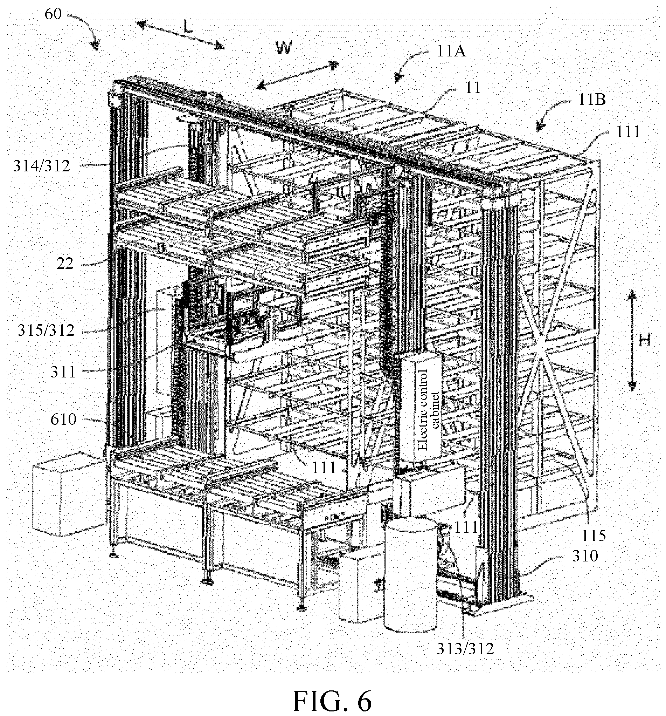

The movable carrier 11 includes a plurality of placement positions 115 (as shown in FIG. 6) for placement of containers 50. The containers 50 are used for storing goods. The placement positions 115 are configured, for example, as accommodating spaces in the shape of a cuboid, and are neatly arranged in a length direction, width direction, and height direction of the movable carrier 11. In this application, the container 50 may be an accessory product specially designed for the movable carrier 11, an ordinary goods box, or a package for goods. The inventory area 40 includes a plurality of parking positions. Each of the parking positions is used for parking of one movable carrier 11. For example, as shown in FIG. 5, the plurality of parking positions are neatly distributed in rows and columns. The work station area 60 includes at least one picking workstation. The picking workstation is used for processing the containers 50 (for example, taking out goods from the containers 50 or placing goods into the containers 50). In other words, the work station area is at least used for completing a production task of picking goods according to an order. The carrier carrying device 30 is used for carrying the movable carrier 11 between the inventory area 40 and the work station area 60. The carrier carrying device 30 is, for example, a carrying robot, which may run under the movable carrier 11 and then push the movable carrier 11 upward off the floor, so that the movable carrier 11 may be moved in a lifted state. The movable carrier 11 may be, for example, a rack. The control apparatus is coupled to the work station area 60 and the carrier carrying device 30 to control working of the work station area 60 and the carrier carrying device 30. For example, the control apparatus may control the movement of the carrier carrying device 30, and may control the process of picking goods in the work station area 60.

The inventory area 40 includes a first area 410 and a second area 420. A maximum distance from the first area 410 to the work station area 60 is not greater than a first predetermined distance, and a minimum distance from the second area 420 to the work station area 60 is greater than the first predetermined distance. The distances are distances from the same work station area 60. Therefore, the first area 410 is closer to the work station area 60, and the second area 420 is farther from the work station area 60.

The warehousing system 100 further includes a waiting area 620 closer to the work station area 60 than the inventory area 40 for queuing the movable carriers 11 for picking. Preferably, each work station area 60 is configured with a corresponding waiting area 620. The waiting area 620 may be regarded as a part of the work station area 60. The carrier carrying device 30 is used for carrying the movable carrier 11 between the inventory area 40, the work station area 60, and the waiting area 620.

As shown in FIG. 6, the work station area 60 includes a plurality of temporary storage positions 22 and a second contain taking and placing assembly 311. The temporary storage positions 22 are used for placement (temporary storage or temporary storage) of containers 50. The second contain taking and placing assembly 311 is used for at least transferring the containers 50 between the temporary storage positions 22 and the movable carrier 11.

Specifically, as shown in FIG. 6, the work station area 60 further includes a portal frame 310 and a picking workstation 610. The temporary storage positions 22 and the second contain taking and placing assembly 311 are both arranged onto the portal frame 310. During logistics production, the carrier carrying device 30 carries the movable carrier 11 to a preset working position corresponding to the picking workstation 610, and the second container taking and placing assembly 311 carries the container 50 required for a production task from the movable carrier 11 to the picking workstation 610 for picking. After a worker finishes picking, the second container taking and placing assembly 311 puts the container 50 back onto the movable carrier 11. Finally, the carrier carrying device 30 carries the movable carrier 11 back to the inventory area 40.

In order to enable the second container taking and placing assembly 311 to arrive at each of the placement positions 115 of the movable carrier 11, the portal frame 310 is provided with a guide mechanism 312. The guide mechanism 312 is transversely movable and vertically movable relative to the portal frame 310. The transverse direction is an L direction in the figure (corresponding to the length direction of the movable carrier 11), and the vertical direction is an H direction in the figure (corresponding to the height direction of the movable carrier 11). The second container taking and placing assembly 311 is arranged onto the guide mechanism 312, so that the second container taking and placing assembly 311 is transversely movable and vertically movable relative to the portal frame 310. The second container taking and placing assembly 311 is coupled to the control apparatus. When the carrier carrying device 30 carries the movable carrier 11 to a preset working position relative to the portal frame 310 under the control of the control apparatus, the second container taking and placing assembly 311 may take and place the container 50 at the placement position 115 by moving transversely and vertically to a position corresponding to the placement position 115. For example, the second container taking and placing assembly 311 has a driving member such as an air cylinder, and the second container taking and placing assembly 311 is movable in a W direction (the W direction is perpendicular to the L direction and the H direction, and corresponds to the width direction of the movable carrier 11) in the figure, so that the container 50 at the placement position 115 can be taken out.

Specifically, the guide mechanism 312 includes a first transverse moving apparatus 313, a first moving rod 314, and a first vertical moving apparatus 315. The first transverse moving apparatus 313 is arranged onto the portal frame 310. The first transverse moving apparatus 313 is coupled to the control apparatus. The first transverse moving apparatus 313 is configured to be transversely movable relative to the portal frame 310. The first moving rod 314 is extended in the vertical direction. The first moving rod 314 is arranged onto the first transverse moving apparatus 313, so that the first moving rod 314 moves transversely in synchronization with the first transverse moving apparatus 313 relative to the portal frame 310. The first vertical moving apparatus 315 is arranged onto the first moving rod 314. The first vertical moving apparatus 315 is coupled to the control apparatus. The first vertical moving apparatus 315 is configured to be vertically movable relative to the first moving rod 314. The second container taking and placing assembly 311 is arranged onto the first vertical moving apparatus 315, so that the second container taking and placing assembly 311 is vertically movable relative to the first moving rod 314. Therefore, the second container taking and placing assembly 311 is transversely movable and vertically movable on the portal frame 310.

Under the action of the guide mechanism 312, the second container taking and placing assembly 311 may transfer the container 50 between different placement positions 115, or may transfer the container 50 at any two of the placement position 115, the temporary storage position 22, and the picking workstation 610.

Thus, the warehousing system 100 may adjust the placement position of the container 50 on the same movable carrier 11. For example, the second container taking and placing assembly 311 is first moved to a position corresponding to placement position A of the movable carrier 11 and takes out container A on placement position A. Then the second container taking and placing assembly 311 is moved to a position corresponding to placement position B of the movable carrier 11 and places container A onto placement position B. When placement position B has been occupied by container B, the second container taking and placing assembly 311 first places container B onto the temporary storage position 22 or another vacant temporary storage position 115 of the movable carrier 11 to vacate placement position B. After placing container A onto placement position B, the warehousing system 100 may place, according to specific requirements, container B onto placement position A (completing the position alternation of two containers of the same movable carrier 11), or continue to place container B onto temporary storage position 22 for temporary storage (for example, waiting to be exchanged with a next container of the movable carrier 11 to be carried to the work station area 60), or alternate container B with another container of the movable carrier 11.

Alternatively, the warehousing system 100 may move the container 50 between a plurality of movable carriers 11. For example, as shown in FIG. 6, there are two movable carriers 11A and 11B simultaneously located at the preset working position corresponding to the picking workstation 610. At this moment, the second container taking and placing assembly 311 is first moved to a position corresponding to the placement position 115 of the movable carrier 11A and takes out container A on the movable carrier 11A, and then is moved to a position corresponding to the placement position 115 of the movable carrier 11B and places container A onto the movable carrier 11B. It will be understood that the method for moving the container 50 between a plurality of movable carriers 11 in the presence of a vacant temporary storage position 22 or a vacant placement position 115 is well known to those skilled in the art and will not be described in detail herein.

As shown in FIG. 6, in order to enable the movable carrier 11 to carry more containers 50, the movable carrier 11 may preferably include a plurality of carrier surfaces 111, for example including two carrier surfaces 111. The carrier surface 111 is a surface of the movable carrier 11 for passing of the container 50, or in other words, the carrier surface 111 is a surface of the movable carrier 11 where an opening of the placement position 115 is located. In the example shown in FIG. 6, the movable carrier 11 includes two carrier surfaces 111 arranged oppositely in the W direction (corresponding to the width direction of the movable carrier 11). Each carrier surface 111 corresponds to (includes) a plurality of placement positions 115. That is, the plurality of placement positions 115 are simultaneously opened on the same carrier surface 111. When a plurality of carrier surfaces 111 are arranged, the placement positions 115 of each layer of the movable carrier 11 may be arranged in rows and columns, thereby increasing the number of placement positions 115. The carrier carrying device 30 is operated below the movable carrier 11. After being pushed upward off the floor, the movable carrier 11 may also rotate about an axis in the vertical direction (H direction), so that the movable carrier 11 rotates about the axis in the vertical direction. In this way, different carrier surfaces 111 of the movable carrier 11 can be directed towards the picking workstation 610, so that all the containers 50 on the movable carrier 11 can be operated.

The warehousing system 100 first determines a future order (also referred to as an undispatched order) and then implements a goods sorting workflow for the future order. The future order includes an order for generating a production task for a next production period and/or an estimated order.

Preferably, in an order pool of the warehousing system 100, both an order for generating a production task and an estimated order are included.

The order for generating the production task refers to an order which has a clear production instruction and can accurately implement the production according to the production instruction, such as an order from a customer or an order formed according to specific requirements of logistics work. For such orders, the content of an SKU is fixed and must ultimately be executed by picking in the work station area 60. Preferably, the warehousing system 100 is configured to dispatch all received orders for generating production tasks to the work station area 60 in batches, where orders that have been dispatched to the work station area 60 but have not been executed are dispatched orders, that is, orders for generating current production tasks.

In one embodiment of the present disclosure, the production task refers to picking out all goods listed in SKUs of current orders from inventory goods, and concentrating all the goods listed in the SKU of each current order into the same or more containers. The production time refers to the time spent in execution of the production task in the work station area. The time when the production task is not executed in the work station area is non-production time.

As the name implies, the estimated order is an order formed by the warehousing system 100 according to an estimate of future work. For example, the warehousing system 100 is configured to estimate orders according to historical orders and/or popularity of goods. The purpose of estimating orders by the warehousing system 100 is to predict and plan future production tasks to a certain extent, so that preparations can be made in advance to improve the work efficiency of future production. It will be understood that the estimated orders cannot be used for generating production tasks, and the content of the SKUs can be changed. For example, the estimated orders are only valid for a preset time window, and the warehousing system 100 continuously updates the estimated orders according to specific situations. In general, new estimated orders are more consistent with future tasks.

In this application, the future order includes orders for generating production tasks, which are not dispatched to the work station area 60, and estimated orders.

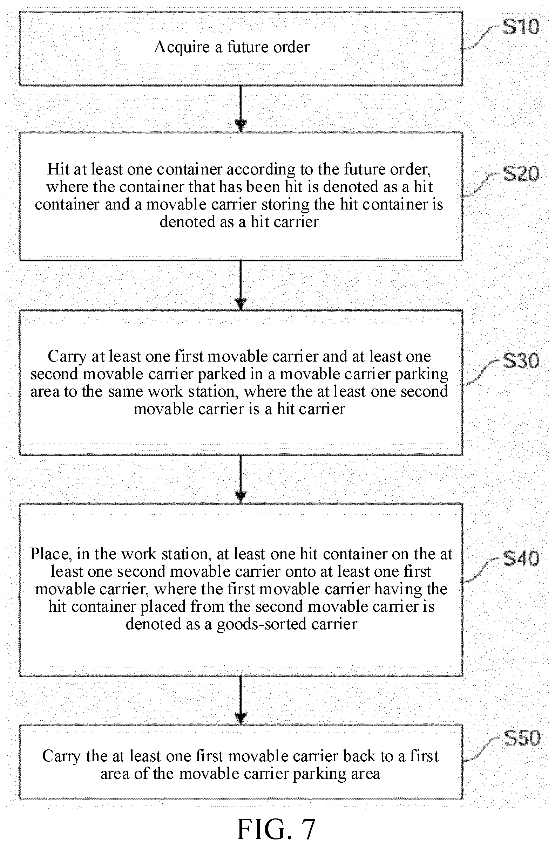

As shown in FIG. 7, in a preferred implementation, the warehousing system 100 is configured to implement the following goods sorting steps:
S10: Acquire a future order.
S20: Hit at least one container 50 according to the future order, where the container 50 that has been hit is denoted as a hit container and a movable carrier 11 for storing the hit container is denoted as a hit carrier.
S30: Carry at least one first movable carrier and at least one second movable carrier parked in the inventory area to the same work station area 60, where at least the second movable carrier is a hit carrier.
S40: Place, in the work station area, at least one hit container on the at least one second movable carrier onto at least one first movable carrier, where the first movable carrier having the hit container placed from the second movable carrier is denoted as a goods-sorted carrier.
S50: Carry at least one goods-sorted carrier back to the first area 410 of the inventory area 40.

According to the goods sorting process from steps S10 to S50, the warehousing system 100 concentrates containers (that is, goods therein) required for the future order on the same or more movable carriers 11. When a production task is executed in future, in most cases, only the goods-sorted movable carrier 11 needs to be processed, which not only improves the utilization rate of the movable carrier 11 in the work station area 60, but also liberates the carrying capacity of the carrier carrying device 30 to a certain extent, thereby improving the work efficiency of future production. The goods sorting is automatically completed by a warehousing device, which liberates manpower and ensures the accuracy of the work. The goods-sorted movable carrier 11 is placed close to the work station area 60. Thus, when executing a future production task, the movable carrier 11 involved in picking may quickly arrive at the work station area 60, thereby improving the work efficiency.

Preferably, the warehousing system 100 is configured to perform the goods sorting during the non-production time of the work station area 60. That is, the warehousing system 100 is configured to carry at least one first movable carrier and at least one second movable carrier parked in the inventory area 40 to the same work station area 60 that does not execute production tasks during the non-production time of the work station area 60, and to place, in the work station area 60, at least one hit container on the at least one second movable carrier onto at least one first movable carrier. The goods sorting is performed during the non-production time so as not to occupy production resources such as the carrier carrying device 30 and the work station area 60, thereby prioritizing the production.

When the number of hit containers is large, for example, more than the number of placement positions 115 of the movable carrier 11, preferably in step S40, the warehousing system 100 is configured to place, in the work station area 60, hit containers on at least one second movable carrier onto at least one first movable carrier, so that all containers 50 on at least one first movable carrier are the hit containers.

In this application, the first movable carrier may be a vacant movable carrier or a hit carrier. The warehousing system 100 may select all vacant movable carriers 11 for goods sorting, or exchange the position of the container 50 between two movable carriers 11 which both carry the container 50 required for a future order.

In this application, preferably, the hit container includes the container 50 for storing hit goods and/or the container 50 for storing goods associated with the hit goods. The hit goods are goods contained in the SKU of the future order. Preferably, the warehousing system 100 is configured to determine, according to historical orders, the goods associated with the hit goods. For example, the SKU of the future order contains goods A (for example, a basketball), and goods B (for example, a pump) is goods associated with goods A (for example, a pump may be attached generally when merchants sell a basketball according to historical sales). Therefore, all the containers 50 in which goods A are stored and/or the containers 50 in which goods B are stored are the hit containers. In this way, the warehousing system 100 gives more comprehensive consideration to future production tasks and makes preparations in advance, which is conducive to improving future production efficiency.

In step S50, in a case that the carrier carrying device 30 carries at least one goods-sorted carrier back to the first area 410 of the inventory area 40, when there is a vacant parking position in the first area 410, the goods-sorted carrier is carried back to the first area 410. When there is no vacant parking position in the first area 410, a non-goods-sorted carrier parked in the first area 410 is carried to the second area 420, and the goods-sorted carrier is then carried to the first area 410.

When both the first movable carrier and the second movable carrier are hit carriers, a vacant temporary storage position 22 or a vacant placement position 115 may be required during goods sorting. As can be seen from the aforementioned description of the process of taking and placing containers by the second container taking and placing assembly 311, if there is a vacant placement position 115 on the movable carrier 11, it is directly possible to transfer the container 50 from one movable carrier 11 to another movable carrier 11. If there is no vacant placement position 115 on the movable carrier 11, the temporary storage position 22 must be used for increasing the working steps and prolonging the working time. Therefore, the warehousing system 100 is preferably configured to cause each movable carrier 11 (at least each movable carrier 11 involved in goods sorting) to always retain at least one vacant placement position 115. Further, in order to reduce the step of rotating the movable carrier 11, the warehousing system 100 is preferably configured to cause each carrier surface 111 of each movable carrier 11 (at least each movable carrier 11 involved in goods sorting) to always retain at least one vacant placement position 115.

In this application, the carrier surface 111 of the movable carrier 11 on which the hit container from the second movable carrier is received or placed is referred to as a goods-sorted carrier surface.

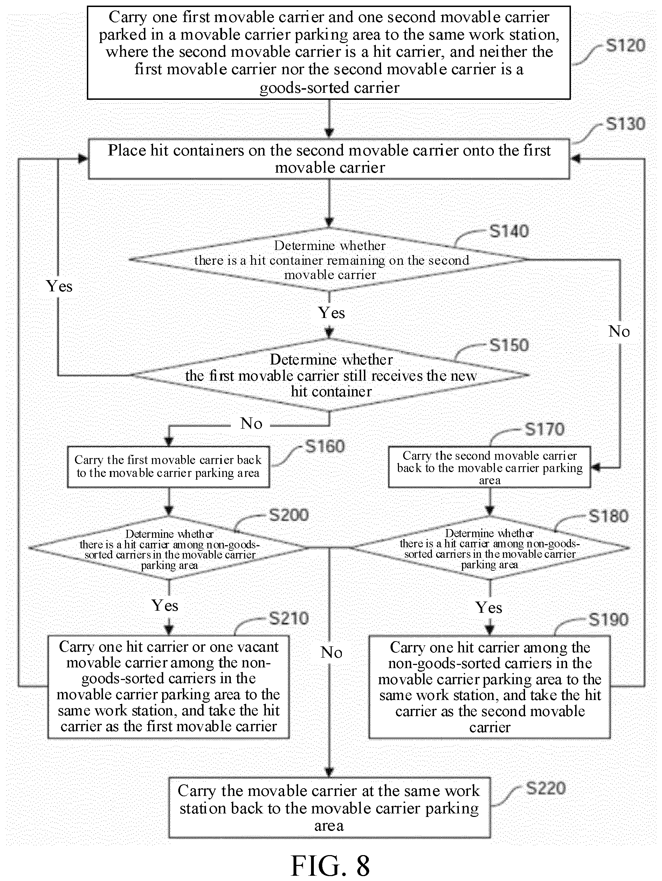

The work of steps S30 to S50 is preferably carried out by the flow shown in FIG. 8.

S120: Carry one first movable carrier and one second movable carrier parked in the inventory area 40 to the same work station area 60, where the second movable carrier is a hit carrier, and neither the first movable carrier nor the second movable carrier is a goods-sorted carrier. Then step S130 is performed.

It will be understood that in this step, the control apparatus must control the carrier carrying device 30 to carry two movable carriers 11 which are not that have been performed with goods sorting to the same work station area 60, and one of the carriers must be a hit carrier in order to complete expected goods sorting. It will be understood that in this step, the first movable carrier carried to the work station area 60 must be a movable carrier 20 capable of receiving a new hit container.

S130: Place hit containers on the second movable carrier onto the first movable carrier. Then step S140 is performed.

S140: Determine whether there is a hit container remaining on the second movable carrier. If yes, step S150 is performed. If no, step S 170 is performed.

S150: Determine whether the first movable carrier still receives the new hit container. If yes, step S130 is performed. If no, step S160 is performed.

S160: Carry the first movable carrier back to the inventory area 40. Then step S200 is performed.

S170: Carry the second movable carrier back to the inventory area 40. Then step S180 is performed.

S180: Determine whether there is a hit carrier in non-goods-sorted carriers in the inventory area 40. If yes, step S 190 is performed. If no, step S220 is performed.

S190: Carry one hit carrier from the non-goods-sorted carriers in the inventory area 40 to the same work station area 60, and take the hit carrier as the second movable carrier. Then step S130 is performed.

S200: Determine whether there is a hit carrier in non-goods-sorted carriers in the inventory area 40. If yes, step S210 is performed. If no, step S220 is performed.

S210: Carry one hit carrier or one vacant movable carrier 11 from the non-goods-sorted carriers in the inventory area 40 to the same work station area 60, and take the carrier as the first movable carrier. Then step S130 is performed.

In steps S140 to S210, if there are all hit containers on the first movable carrier, the first movable carrier is carried back to the inventory area 40. Then one movable carrier 11 to be that have been performed with goods sorting is re-carried from the inventory area 40 to the work station area 60 as a new first movable carrier, and the hit containers on the existing second movable carrier which have not been transferred are continuously transferred to the new first movable carrier. If there is no hit container on the second movable carrier, the second movable carrier is carried back to the inventory area 40. Then one hit carrier is re-carried from the inventory area 40 to the work station area 60 as a new second movable carrier, and the hit containers on the new second movable carrier are continuously transferred to the existing first movable carrier.

S220: Carry the movable carrier 11 at the same work station area 60 back to the inventory area 40.

In step S220, all the hit carriers have gone through the goods sorting flow, and the two movable carriers 11 located in the work station area 60 have also completed the gathering process of hit containers to the same movable carrier 11. At this moment, the goods sorting is completed, and the two movable carriers 11 located in the work station area 60 are carried back to the inventory area 40. In step S220, the movable carrier 11 in which the hit containers are placed in the two movable carriers 11 located in the work station area 60 is preferably carried back to the first area 410.

As previously described, the warehousing system 100 preferably maintains at least one vacant placement position 115 on each carrier surface of the movable carrier 11. In this case, step S130 specifically includes: placing the hit containers on the second movable carrier onto the first movable carrier when each of the carrier surfaces of the first movable carrier has a vacant placement position and at least one of the carrier surfaces of the first movable carrier has a plurality of vacant placement positions; or exchanging non-hit containers on the first movable carrier with the hit containers on the second movable carrier when each of the carrier surfaces of the first movable carrier has only one vacant placement position. Step S150 specifically includes: determining whether there is a non-hit container remaining on the first movable carrier or whether there are a plurality of (more than one) vacant placement positions on at least one of the carrier surfaces 111 of the first movable carrier (if yes, step S130 is performed, and if no, step S160 is performed).

Definitely, the warehousing system 100 may also occupy each placement position of the movable carrier 11, so that the utilization rate of the movable carrier 11 is maximized. In this case, step S130 specifically includes: placing the hit containers on the second movable carrier onto the first movable carrier when the first movable carrier has a vacant placement position; or exchanging non-hit containers on the first movable carrier with the hit containers on the second movable carrier when the first movable carrier has no vacant placement position. Step S150 specifically includes: determining whether there is a non-hit container remaining on the first movable carrier or whether there is a vacant placement position on the first movable carrier (if yes, step S130 is performed, and if no, step S160 is performed).

In the goods sorting process of steps S120 to S220, the warehousing system 100 is configured to improve the goods sorting effect in a variety of ways.

Preferably, in at least one selected from step S120, step S190, and step S210, the warehousing system 100 is configured to calculate a container index of each hit container on the non-goods-sorted carriers among the hit carriers in the inventory area 40, and determine, according to the container index, the non-goods-sorted carriers carried to the same work station area 60. The container index is the number of future orders that hit the containers 50 in all the future orders (for example, if there are 100 future orders and 12 of the future orders hit container A and 23 of the future orders hit container B, the order index of container A is 12, and the order index of container B is 23). For example, the warehousing system 100 is configured to calculate a carrier index of each non-goods-sorted carrier among the hit carriers parked in the inventory area 40, and take the non-goods-sorted carrier with the maximum carrier index as the first movable carrier or the second movable carrier. The carrier index is a sum of the container indexes of all the hit containers on the hit carriers. Alternatively, the warehousing system 100 is configured to take the non-goods-sorted carrier placed with the hit container with the maximum container index among the non-goods-sorted carriers among the hit carriers parked in the inventory area as the first movable carrier or the second movable carrier. In this way, the warehousing system 100 prioritizes containers that contribute a lot to future orders, and may obtain better goods sorting results in a short period of time. When the goods sorting time is limited, the method can maximize the goods sorting effect.

Preferably, in step S120, the control apparatus first determines the same work station area 60. When there are at least three non-goods-sorted carriers among the hit carriers parked in the inventory area 40, two non-goods-sorted carriers with a minimum moving path of moving to the same work station area 60 are moved to the same work station area 60. Alternatively, in step S120, the control apparatus first determines two movable carriers to be carried from the inventory area 40. When a plurality of work station areas 60 are free, the control apparatus respectively calculates a sum of lengths of moving paths in which the two movable carriers 11 to be carried from the inventory area 40 are moved to each of the plurality of free work station areas 60, and takes the work station area 60 with the minimum sum of lengths of the moving paths as the same work station area 60. According to this application, the moving path of the movable carrier 11 is thus shortest, and the goods sorting efficiency can be improved.

When the warehousing system 100 includes a plurality of work station areas 60, future orders are dispatched to different work station areas 60, so that hit containers are bound (or associated) with different work station areas 60 respectively (the hit containers must be picked at the work station areas 60 receiving bound orders thereof). Thus, hit carriers are associated (or bound) with one or more work station areas 60 through the hit containers carried thereby.

In this case, in step S130, when the future order is an order to be processed in a next production period and the first movable carrier is a hit carrier, the warehousing system 100 is preferably configured to determine the work station area 60 associated with the first movable carrier in the next production period, and preferentially exchange a hit container that is on the second movable carrier and is associated with the work station area 60 associated with the first movable carrier to the first movable carrier. In this way, the hit container on the first movable carrier is a hit container bound with the same work station area 60. When picking in the work station area 60, the utilization rate of the first movable carrier is greatly improved, and the first movable carrier is picked in as few work station areas 60 as possible, thereby reducing the link of moving between the work station areas, and improving the production efficiency to a certain extent. Further, the warehousing system 100 is preferably configured to determine the future order associated with the first movable carrier in the next production period, and preferentially exchange a hit container that is on the second movable carrier and is associated with the future order associated with the first movable carrier to the first movable carrier. In this way, the hit container on the first movable carrier is a hit container bound with the same future order. When picking in the work station area 60, since the matching rate of the first movable carrier and the future order is improved, the future order can be satisfied as soon as possible, and the production efficiency is further improved.

It will be understood that in this application, the two movable carriers 11 for goods sorting must be simultaneously located in the same work station area 60 without the use of the temporary storage position 22. The two movable carriers 11 for goods sorting are not required to be simultaneously located in the same work station area 60 with the use of the temporary storage position 22. For example, one selected from the movable carriers, such as movable carrier A, may first be delivered to the work station area 60, and the container 50 on movable carrier A to be exchanged to the other selected from the first and second movable carriers, such as movable carrier B, may be placed at the temporary storage position 22. Then movable carrier A is carried back to the inventory area 40. Then movable carrier B is carried to the same work station area 60, and the container 50 placed at the temporary storage position 22 to be exchanged to movable carrier B is placed onto movable carrier B from the temporary storage position 22. When the number of temporary storage positions 22 is sufficient relative to the number of containers 50 to be exchanged on the movable carrier, the method can increase scheduling flexibility to a certain extent.

According to this application, the warehousing system automatically concentrates containers (that is, goods therein) required for the future order on the same or more movable carriers, and places the goods-sorted movable carriers near the work station area, thereby liberating manpower and improving future work efficiency.

As previously described, the goods sorting operation for fixed carriers in the warehousing system of the present disclosure is completed in the inventory area, while the goods sorting operation for movable carriers is completed in the work station area. That is, the carrying device carries selected carriers to the work station area according to the goods sorting instruction first, and then moves containers on the carriers to a same target carrier. The target carrier may be a carrier where one of the at least two containers selected by the goods sorting instruction is located.

However, in actual use, the control server of the warehousing system may simultaneously control the carrier carrying device to carry a plurality of movable carriers in sequence, and at least one pair of movable carriers among the movable carriers is selected by the goods sorting instruction, while the other movable carriers are directly involved in other operations such as picking without the goods sorting operation. Thus, when one of the pair of movable carriers selected by the goods sorting instruction arrives at the work station area first and the other has not yet arrived, the carrying device needs to wait. During the waiting period, since the space of the work station area is occupied, the other movable carriers cannot enter the work station area to perform corresponding operation, and the warehousing system is in a shutdown state.

To this end, if the carrier of the warehousing system is a movable carrier, with continued reference to FIG. 1, according to one embodiment of the present disclosure, the warehousing system of the present disclosure further includes a waiting area. The control server is further configured to be used for controlling the carrier carrying device 30 to carry at least three carriers including at least one pair of carriers selected by the goods sorting instruction, and setting one of the pair of carriers as the target carrier. When one carrier in the at least one pair of carriers arrives at the work station area first, the control server is further configured to be used for controlling the carrier carrying device 30 to carry one carrier in the pair of carriers to the waiting area to wait for the arrival of the other carrier. When the other carrier in the at least one pair of carriers arrives at the work station area, the control server controls the carrier carrying device to carry, to the work station area, the carrier in the at least one pair of carriers waiting in the waiting area. If at least one pair of carriers selected by the goods sorting instruction arrive at the work station successively or at the same time, but the work station is in a working state at this moment, the at least one pair of carriers is first carried to the waiting area for waiting. When the work station is free after the processing is completed, the at least one pair of carriers is carried to the work station. It should also be noted that at least one pair of carriers selected by the goods sorting instruction may include a target carrier or may not include a target carrier. When the target carrier is not included, the control server controls the carrier carrying device to carry the target carrier to the work station. It will be understood that if the target carrier and the carrier selected by the goods sorting instruction do not arrive at the work station at the same time or continuously, the carrier that arrived at the work station first is moved to the waiting area for waiting. Alternatively, although the carriers arrive at the same time or continuously, but the work station is in a working state, the target carrier and the carrier selected by the goods sorting instruction are carried to the waiting area for waiting. When the work station is free, the target carrier and the carrier selected by the goods sorting instruction are carried to the work station for goods sorting.

The control method for the warehousing system includes the following steps:
The control server controls the carrier carrying device 30 to simultaneously carry at least three carriers including at least one pair of carriers selected by the goods sorting instruction, and sets one of the pair of carriers as the target carrier.

The control server controls the carrier carrying device 30 to carry one carrier in the pair of carriers to the waiting area to wait for the arrival of the other carrier, and to then carry the pair of carriers to the work station area.

Thus, a first-arriving carrier selected by the goods sorting instruction waits in the waiting area. At this moment, other carriers not selected by the goods sorting instruction may be carried to the work station area for corresponding operation. After another carrier selected by the goods sorting instruction also arrives at the waiting area, the carrier carrying device 30 sequentially carries the pair of carriers selected by the goods sorting instruction from the waiting area to the work station area for goods sorting, so that a plurality of carriers are queued in order to perform corresponding operation, thereby avoiding the occurrence of chaotic and out-of-control scheduling of the warehousing system, and ensuring that the warehousing system works smoothly and orderly.

According to one embodiment of the present disclosure, the warehousing system of the present disclosure further includes a waiting area. The control server is further configured to be used for controlling the carrier carrying device 30 to simultaneously carry at least three carriers including at least one pair of carriers selected by the goods sorting instruction, and setting one of the pair of carriers as the target carrier. The control server is further configured to be used for controlling the carrier carrying device to carry the pair of carriers to the work station area and to carry the other carriers to the waiting area for queuing.

Thus, one pair of carriers selected by the goods sorting instruction is first carried to the work station area for goods sorting while other carriers are carried to the waiting area for waiting, so that a plurality of carriers are queued in order to perform corresponding operation, thereby avoiding the occurrence of chaotic and out-of-control scheduling of the warehousing system, and ensuring that the warehousing system works smoothly and orderly.

According to one embodiment of the present disclosure, with continued reference to FIG. 3, the fixed container carrying device of the present disclosure has a temporary storage mechanism. The temporary storage mechanism has at least one temporary storage position, and the temporary storage position is used for temporarily storing one container.

The control server is further configured to be used for controlling the carrier carrying device to carry one pair of carriers selected by the goods sorting instruction to the work station area, and setting one of the pair of carriers as the target carrier.

The fixed container carrying device is further configured to be used for taking out containers on the carriers, placing the containers to the temporary storage position, taking out the containers from the temporary storage position after the target carrier arrives, and placing the containers onto the target carrier.

Thus, when another carrier is inserted into one pair of carriers selected in the goods sorting instruction, a container to be moved on the selected carrier that arrives first may be temporarily stored on the temporary storage position, and the container temporarily stored on the temporary storage position may be moved to the target carrier after the selected target carrier arrives. During the waiting period, the fixed container carrying device 31 may perform corresponding operation on the other carriers, thereby ensuring smooth and orderly operation of the warehousing system.

When the target carrier of the warehousing system arrives at the work station area, all containers which have order relevance on the target carrier are carried to a workbench for workers or devices to perform picking operation, and at the same time, the carrier carrying device carries the target carrier to the waiting area or return to the inventory area, so as to avoid the space of the work station area being occupied by vacant target carriers and affecting the picking.

To this end, according to one embodiment of the present disclosure, the fixed container carrying device of the present disclosure has a temporary storage mechanism. The temporary storage mechanism has at least one temporary storage position, and the temporary storage position is used for temporarily storing containers.

The fixed container carrying device is configured to temporarily store a container on which a picking operation has been performed to the temporary storage position, take out the containers from the temporary storage position after a target carrier for the containers arrives at the work station area, and place the containers onto the target carrier.

Thus, during the picking operation of the warehousing system, the target carrier is moved away, and the containers that have completed each picking operation are temporarily stored on the temporary storage position. After the picking operation of all containers is completed, the target carriers for these containers are carried to the work station area, and each container is returned to the corresponding target carrier. The space of the work station area is fully utilized, and the cleanliness and openness of the work station area are maintained.

The carrying device performs the goods sorting operation according to the goods sorting instruction of the control server. That is, the container selected in the goods sorting instruction is moved to the same target carrier. The goods sorting instruction includes storage position information of the selected container on the carrier where the container is located. The storage position information includes a storage position ID. For example, the storage position ID includes a carrier number, a column number and a row number of the container on the carrier, and the like. The control server sends the storage position information to the carrying device, and the carrying device finds the corresponding storage position according to the storage position information to take and place the container.

In actual application scenarios, due to goods sorting errors and other reasons, the storage position may not be stored in the container or identity information of the stored container is inconsistent with that of the container selected by the goods sorting instruction, which in turn leads to the failure of the goods sorting operation.

To this end, in one embodiment of the present disclosure, the carrying device of the present disclosure further includes an identification apparatus. The identification apparatus is configured to be used for identifying at least one of the following information:
whether a container is stored at a storage position for a carrier selected by the goods sorting instruction; or
whether identity information of a container at a storage position for a carrier selected by the goods sorting instruction is consistent with identity information of a container selected by the goods sorting instruction.

The identity information of the container is a unique code thereof, and code information is set for each container in the warehousing system, so that the carrying device can accurately find the target container, and the specific coding mode depends on the management mode of the warehousing system, which may be set according to actual application scenarios and will not be limited herein.

In detail, the identification apparatus includes a 2D/3D image acquisition device.

The control method for the warehousing system in this embodiment includes the following steps:
The identification apparatus identifies whether a container is stored at a storage position for a carrier selected by the goods sorting instruction.

If the container is stored at the storage position, whether identity information of the container is consistent with identity information of a container selected by the goods sorting instruction is continuously identified, otherwise, exception handling is performed or the server gives an alarm.

If the identity information is consistent, the carrying device moves the container onto the target carrier.

Otherwise, exception handling is performed or the server gives an alarm. That is, the control server is further configured to generate, according to an identification result of the identification apparatus being exception, an exception handling instruction or issue an alarm signal.

The exception handling includes generating a next goods sorting operation instruction.

Thus, the carrying device performs information identification before performing the goods sorting operation, so that the waste of resources caused by useless work can be avoided, and the goods sorting efficiency can be further improved.

When the warehousing system completes goods sorting, the picking operation is performed. To this end, the carrying device of the present disclosure is further configured to take out, according to the order picking instruction generated by the control server, at least two containers that have been performed with goods sorting on the target carrier and place the containers into a picking operation area for picking.

It will be understood that the picking operation of the warehousing system may be completed manually or by a picking device, and the specific implementation is not limited herein.

According to one embodiment of the present disclosure, the work station area of the present disclosure is docked with a docking device. The docking device includes a conveyor line or carrier, and the conveyor line is used for transferring a container to or out of the work station area for subsequent operation.

According to one embodiment of the present disclosure, the docking device includes a carrier, and the carrier is used for temporary storing a container.

According to one embodiment of the present disclosure, the work station area of the present disclosure is provided with a picking workstation. The carrying device places a container into the picking workstation for picking.

After the picking operation is completed, the control server is further configured to update the inventory information according to a picking operation result.

According to a specific picking operation result, the control server updates the inventory information in the following ways:
First, when a container on which a picking operation has been performed is empty, the control server updates the inventory information. The mode of inventory update may be to delete the empty container or indicate that the container is in a free state.

That is, the control server is further configured to update, according to a container on which a picking operation has been performed being empty, the inventory information.

The removed container returns to a storage area for the empty container waiting to be enabled.

Second, when there are goods remaining in the container on which a picking operation has been performed, the carrying device places the container back into the carrier, and the control server updates the inventory information to retain the container and deducts goods information that is picked and removed. For example, 100 bottles of cola were originally stored in a container, and after the picking operation is completed, there are 50 bottles remaining in the container. The control server includes information of the container and updates the quantity of bottles of cola therein to 50.

That is, the control server is further configured to update, according to goods remaining in a container on which a picking operation has been performed, the number of goods in the container in current inventory information to a surplus, so as to update inventory information.

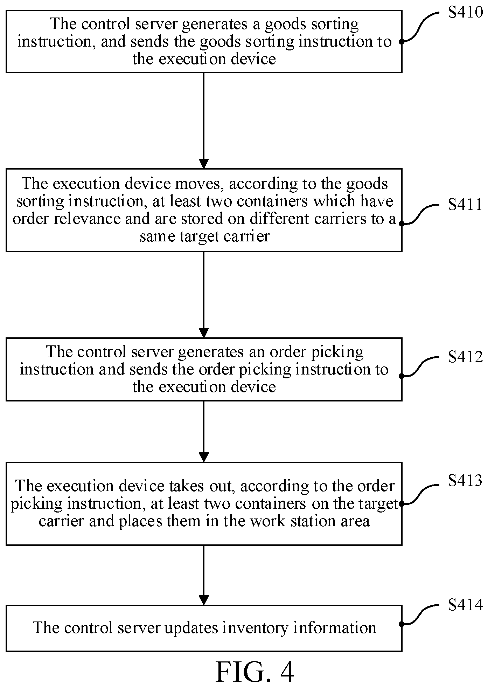

With reference to FIG. 4, the control method for the warehousing system includes the following main steps:
S410: The control server generates a goods sorting instruction, and sends the goods sorting instruction to the carrying device.
S411: The carrying device moves, to a same target carrier according to the goods sorting instruction, at least two containers which have order relevance and are stored on different carriers.

With continued reference to FIG. 4, the control method for the warehousing system of the present disclosure further includes the following steps:
S412: The control server generates an order picking instruction and sends the order picking instruction to the carrying device, where the order picking instruction includes at least two containers on the target carrier that have been performed with goods sorting.
S413: The carrying device takes out, according to the order picking instruction, at least two containers on the target carrier and places them in the work station area.

According to the control method for the warehousing system of the present disclosure, a goods sorting operation is first performed. That is, at least two containers which have order relevance and are stored on different carriers are stored to a same target carrier. Then, an order that hits the at least two containers at the same time is preferentially selected to generate an order picking instruction when picking and dispatching orders. Then, the at least two containers are carried from the target carrier to the work station area according to the order picking instruction. Finally, inventory information is updated.

Obviously, according to the control method for the warehousing system of the present disclosure, containers can be taken from the same carrier and placed to the work station area for corresponding operation. The step in the prior art that the carrying device reciprocates between different carriers, or the step that the containers are respectively taken out and placed for operation after different carriers are carried to the work station area is omitted, thereby greatly improving the operation efficiency of the warehousing system.

In order to further update the inventory information of the warehousing system in time, when an order picking instruction is completed, the control method for the warehousing system of the present disclosure further includes the following steps:
S414: The control server updates inventory information.

In detail, according to a specific picking operation result, the control server updates the inventory information in the following ways:
First, when a container is empty after the picking operation, the control server updates the inventory information as deleting the empty container.

That is, the control server is further configured to delete, according to the container on which a picking operation has been performed being empty, the container from current inventory information to update the inventory information or indicate that the container is in a free state.

The removed container returns to a storage area for the empty container waiting to be enabled.

Second, when there are goods remaining in the container on which a picking operation has been performed, the carrying device places the container back into the carrier, and the control server updates the inventory information to retain the container and deducts goods information that is picked and removed. For example, 100 bottles of cola were originally stored in a container, and after the picking operation is completed, there are 50 bottles remaining in the container. The control server includes information of the container and updates the quantity of bottles of cola therein to 50.

That is, the control server is further configured to update, according to goods remaining in a container on which a picking operation has been performed, the number of goods in the container in current inventory information to a surplus, so as to update inventory information.

According to one embodiment of the present disclosure, if the carrier of the warehousing system of the present disclosure is a movable carrier, the carrier carrying device is further configured to carry the current carrier from the work station area to the inventory area after the goods sorting operation is completed, so as to prevent the carrier temporarily not involved in the work from occupying the space of the work station area, causing waste of resources or inconvenient movement of workers or other devices in the work station area.

Similarly, according to one embodiment of the present disclosure, if the carrier of the warehousing system of the present disclosure is a movable carrier, the carrier carrying device is further configured to carry the target carrier from the work station area to the inventory area after the picking operation is completed, so as to prevent the carrier temporarily not involved in the work from occupying the space of the work station area, causing waste of resources or inconvenient movement of workers or other devices in the work station area.

It will be understood that the carrier carrying device may be configured to only recover the current carrier after the goods sorting operation or only recover the target carrier after the picking operation. Definitely, the carrier carrying device may recover the current carrier after the goods sorting operation and recover the target carrier after the picking operation. Those skilled in the art can choose according to actual application scenarios.

In one embodiment for the control method of the present disclosure, when the carrier is a movable carrier, the moving, to a same target carrier by the carrying device according to the goods sorting instruction, at least two containers which have order relevance and are stored on different carriers includes:
carrying, by a carrier carrying device according to the goods sorting instruction, current carriers for storing at least two containers respectively and a target carrier from the inventory area to the work station area;
arranging a fixed container carrying device in the work station area, taking out, according to the goods sorting instruction, at least two containers from current carriers where they are respectively located, and placing the containers onto the target carrier; and/or
taking out, by the fixed container carrying device according to the order picking instruction, at least two containers from the target carrier for picking.

In one embodiment for the control method of the present disclosure, when the carrier is a movable carrier, the moving, to a same target carrier by the carrying device according to the goods sorting instruction, at least two containers which have order relevance and are stored on different carriers includes:
carrying, by a carrier carrying device according to the goods sorting instruction, current carriers for storing at least two containers respectively from the inventory area to the work station area;
arranging a fixed container carrying device in the work station area, selecting, according to the goods sorting instruction, one current carrier as a target carrier, taking out containers on the remaining current carriers, and placing the containers onto the target carrier; and/or
taking out, by the fixed container carrying device according to the order picking instruction, at least two containers from the target carrier for picking.

In one embodiment for the control method of the present disclosure, the inventory area includes a first area and a second area. A maximum distance from the first area to the work station area is not greater than a first predetermined distance, and a minimum distance from the second area to the work station area is greater than the first predetermined distance.

The warehousing system is configured to implement the following steps:
acquiring a future order;
hitting at least one of the containers according to the future order, where the container that has been hit is denoted as a hit container and a movable carrier storing the hit container is denoted as a hit carrier;
carrying at least one first movable carrier and at least one second movable carrier parked in the inventory area to the same work station area, where the at least one second movable carrier is a hit carrier;
placing, in the work station area, at least one hit container on the at least one second movable carrier onto at least one first movable carrier, where the first movable carrier having the hit container placed from the second movable carrier is denoted as a goods-sorted carrier; and
carrying at least one goods-sorted carrier back to the first area.

In one embodiment for the control method of the present disclosure, the carrying at least one first movable carrier and at least one second movable carrier parked in the inventory area to the same work station area, placing, in the work station area, at least one hit container on the at least one second movable carrier onto at least one first movable carrier and carrying at least one goods-sorted carrier back to the first area includes:
S 120: Carry one first movable carrier and one second movable carrier parked in the inventory area to the same work station area, where the second movable carrier is a hit carrier, and neither the first movable carrier nor the second movable carrier is a goods-sorted carrier. Then step S130 is performed.
S130: Place hit containers on the second movable carrier onto the first movable carrier. Then step S140 is performed.
S140: Determine whether there is a hit container remaining on the second movable carrier. If yes, step S150 is performed. If no, step S170 is performed.
S150: Determine whether the first movable carrier still receives the new hit container. If yes, step S130 is performed. If no, step S160 is performed.
S160: Carry the first movable carrier back to the inventory area. Then step S200 is performed.
S170: Carry the second movable carrier back to the inventory area. Then step S180 is performed.
S 180: Determine whether there is a hit carrier among non-goods-sorted carriers in the inventory area. If yes, step S 190 is performed. If no, step S220 is performed.
S190: Carry one hit carrier among the non-goods-sorted carriers in the inventory area to the same work station area, and take the hit carrier as the second movable carrier. Then step S130 is performed.
S200: Determine whether there is a hit carrier among the non-goods-sorted carriers in the inventory area. If yes, step S210 is performed. If no, step S220 is performed.
S210: Carry one hit carrier or one vacant movable carrier among the non-goods-sorted carriers in the inventory area to the same work station area, and take the carrier as the first movable carrier. Then the step is performed.
S220: Carry the movable carrier at the same work station area back to the inventory area.

In one embodiment for the control method of the present disclosure, in at least one selected from step S120, step S190, and step S210, the warehousing system is configured to:
calculate a container index of each hit container on the non-goods-sorted carriers among the hit carriers in the inventory area, and determine, according to the container index, the non-goods-sorted carriers carried to the same work station area, where the container index is the number of future orders that hit the containers in all the future orders.

In one embodiment for the control method of the present disclosure, in at least one selected from step S120, step S190, and step S210, the warehousing system is configured to:
calculate a carrier index of each non-goods-sorted carrier among the hit carriers parked in the inventory area, and take the non-goods-sorted carrier with the maximum carrier index as the first movable carrier or the second movable carrier, where the carrier index is a sum of the container indexes of all the hit containers on the hit carriers; or
take the non-goods-sorted carrier placed with the hit container with the maximum container index among the non-goods-sorted carriers among the hit carriers parked in the inventory area as the first movable carrier or the second movable carrier.

In one embodiment for the control method of the present disclosure, in step S120,
a control apparatus first determines the same work station area, where the control apparatus is coupled to the work station area and the carrier carrying device to control working of the work station area and the carrier carrying device; and
when there are at least three non-goods-sorted carriers among the hit carriers parked in the inventory area, two non-goods-sorted carriers with a minimum moving path of moving to the same work station area are moved to the same work station area.

In one embodiment for the control method of the present disclosure, in step S120,
a control apparatus first determines the two movable carriers to be carried from the inventory area, where the control apparatus is coupled to the work station area and the carrier carrying device to control working of the work station area and the carrier carrying device; and
when the plurality of work station areas are free, the control apparatus respectively calculates a sum of lengths of moving paths in which the two movable carriers to be carried from the inventory area are moved to each of the plurality of free work station areas, and takes the work station area with the minimum sum of lengths of the moving paths as the same work station area.

In one embodiment for the control method of the present disclosure, the future order is an order to be processed in a next production period, and the first movable carrier is a hit carrier.

In step S130, the warehousing system is configured to determine the work station area associated with the first movable carrier in the next production period, and preferentially exchange a hit container that is on the second movable carrier and is associated with the work station area associated with the first movable carrier to the first movable carrier.

In one embodiment for the control method of the present disclosure, the future order is an order to be processed in the next production period, and the first movable carrier is a hit carrier.

In step S130, the warehousing system is configured to determine the future order associated with the first movable carrier in the next production period, and preferentially exchange a hit container that is on the second movable carrier and is associated with the future order associated with the first movable carrier to the first movable carrier.

In one embodiment for the control method of the present disclosure, the movable carrier includes a plurality of carrier surfaces. The warehousing system is configured to cause each carrier surface of the movable carrier to always retain at least one vacant placement position.

In the step, the placing hit containers on the second movable carrier onto the first movable carrier includes:
placing the hit containers on the second movable carrier onto the first movable carrier when each of the carrier surfaces of the first movable carrier has a vacant placement position and at least one of the carrier surfaces of the first movable carrier has a plurality of vacant placement positions;
   or
exchanging non-hit containers on the first movable carrier with the hit containers on the second movable carrier when each of the carrier surfaces of the first movable carrier has only one vacant placement position.

In step S150, the determining whether the first movable carrier still receives the new hit container includes:
determining whether there is a non-hit container remaining on the first movable carrier or whether there are a plurality of vacant placement positions on at least one of the carrier surfaces of the first movable carrier.

In one embodiment for the control method of the present disclosure, in step S130, the placing hit containers on the second movable carrier onto the first movable carrier includes:
placing the hit containers on the second movable carrier onto the first movable carrier when the first movable carrier has a vacant placement position;
   or
exchanging non-hit containers on the first movable carrier with the hit containers on the second movable carrier when the first movable carrier has no vacant placement position.

In step S150, the determining whether the first movable carrier still receives the new hit container includes:
determining whether there is a non-hit container remaining on the first movable carrier or whether there is a vacant placement position on the first movable carrier.

Embodiments of the present disclosure have been described above. The above description is exemplary not exhaustive and is not limited to the disclosed embodiments. Without departing from the scope and spirit of the illustrated embodiments, many modifications and alterations are apparent to those of ordinary skill in the art. The terms used herein has been chosen to best explain the principles and practical applications of the embodiments or technological improvements to the marketplace, or to enable those of ordinary skill in the art to understand the embodiments disclosed herein. The scope of the present disclosure is defined by the appended claims.

## Claims

1. A warehousing system, comprising:
a work station area;
an inventory area, which is used for storing carriers, storage positions of the carriers being used for storing containers;
a control server, which is configured to be used for generating a goods sorting instruction; and
a carrying device, which is configured to carry, according to the goods sorting instruction, at least two containers which have order relevance and are stored on different carriers to a same target carrier.

2. The warehousing system according to claim 1, wherein the control server is further configured to generate an order picking instruction, and the order picking instruction comprises the at least two containers that have been performed with goods sorting; and
the carrying device is further configured to take out, according to the order picking instruction, at least two containers on the target carrier and place them in the work station area.

3. The warehousing system according to claim 1 or 2, wherein the carrying device is configured to:
transfer, when being required to carry one container according to the goods sorting instruction, the container to a free storage position of the target carrier;
or, exchange the container with another container on the target carrier.

4. The warehousing system according to claim 1 or 2, wherein the carrying device is configured to:
transfer, when being required to move a plurality of containers according to the goods sorting instruction, the plurality of containers to free storage positions of the target carrier respectively;
or, exchange the plurality of containers with other containers on the target carrier;
or, transfer some of the plurality of containers to free storage positions of the target carrier and exchange others of the plurality of containers with other containers on the target carrier.

5. The warehousing system according to claim 1 or 2, wherein the carrying device selects, according to the goods sorting instruction, a carrier where one of the at least two containers is located as the target carrier.

6. The warehousing system according to claim 2, wherein when the carrier is a fixed carrier, the carrying device comprises:
a movable container carrying device, which is configured to take out, in the inventory area according to the goods sorting instruction, the at least two containers from the current carriers where they are respectively located and place them onto the target carrier; and/or
the movable container carrying device is further configured to take out, in the inventory area according to the order picking instruction, the at least two containers on the target carrier, and move from the inventory area to the work station area for picking.

7. The warehousing system according to claim 2, wherein when the carrier is a movable carrier, the movable carrier comprises a plurality of placement positions, the placement positions are used for placement of containers that are used for storing goods, and the carrying device comprises:
a carrier carrying device, which is configured to carry, according to the goods sorting instruction, current carriers storing at least two containers respectively and a target carrier from the inventory area to the work station area;
a fixed container carrying device, which is arranged in the work station area, and configured to take out, according to the goods sorting instruction, at least two containers from current carriers where they are respectively located and place them onto the target carrier; and/or
the fixed container carrying device is further configured to take out, according to the order picking instruction, at least two containers from the target carrier for picking.

8. The warehousing system according to claim 2, wherein when the carrier is a movable carrier, the movable carrier comprises a plurality of placement positions, the placement positions are used for placement of containers that are used for storing goods, and the carrying device comprises:
a carrier carrying device, which is configured to carry, according to the goods sorting instruction, current carriers storing at least two containers respectively from the inventory area to the work station area;
a fixed container carrying device, which is arranged in the work station area, and configured to select, according to the goods sorting instruction, one current carrier as a target carrier, take out containers on the remaining current carriers and place them onto the target carrier; and/or
the fixed container carrying device is further configured to take out, according to the order picking instruction, at least two containers from the target carrier for picking.

9. The warehousing system according to claim 2, wherein when the target carrier is a movable carrier, the carrying device comprises:
a movable container carrying device, which is configured to carry, in the inventory area, the at least two containers from current carriers where they are respectively located to the target carrier; and
a carrier carrying device, which is configured to carry the target carrier from the inventory area to the work station area for picking.

10. The warehousing system according to claim 7 or 8, wherein the carrier carrying device is further configured to carry the current carriers from the work station area to the inventory area after completion of goods sorting; and/or
the carrier carrying device is further configured to carry the target carrier from the work station area to the inventory area after completion of picking.

11. The warehousing system according to claim 7 or 8, further comprising a waiting area,
wherein the control server is further configured to be used for controlling the carrier carrying device to carry at least one pair of carriers selected by the goods sorting instruction; and
when one carrier in the at least one pair of carriers selected by the goods sorting instruction arrives at the work station area first, the carrier carrying device carries the carrier arriving at the work station area first to the waiting area to wait for the arrival of the remaining carriers in the at least one pair of carriers selected by the goods sorting instruction.

12. The warehousing system according to claim 11, wherein when the remaining carriers in the at least one pair of carriers selected by the goods sorting instruction arrive at the work station area, the carrier carrying device is controlled to carry the carrier in the waiting area to the work station area.

13. The warehousing system according to claim 7 or 8, wherein the fixed container carrying device has a temporary storage mechanism, the temporary storage mechanism has at least one temporary storage position, and the temporary storage position is used for temporarily storing containers;
the control server is further configured to be used for controlling the carrier carrying device to carry one pair of carriers selected by the goods sorting instruction to the work station area; and
the fixed container carrying device is further configured to be used for taking out containers on the carriers, placing the containers onto the temporary storage position, taking out the containers from the temporary storage position after the target carrier arrives, and placing the containers onto the target carrier.

14. The warehousing system according to claim 7 or 8, wherein the fixed container carrying device has a temporary storage mechanism, the temporary storage mechanism has at least one temporary storage position, and the temporary storage position is used for temporarily storing containers; and
the fixed container carrying device is configured to temporarily store a container on which a picking operation has been performed to the temporary storage position, take out the container from the temporary storage position after a target carrier for the containers arrives at the work station area, and place the container onto the target carrier.

15. The warehousing system according to claim 1 or 2, wherein the carrying device further comprises an identification apparatus, and the identification apparatus is configured to be used for identifying at least one of the following information:
whether there is a container stored at a storage position of a carrier selected by the goods sorting instruction; or
whether identity information of a container at a storage position of a carrier selected by the goods sorting instruction is consistent with identity information of a container selected by the goods sorting instruction.

16. The warehousing system according to claim 15, wherein the identification apparatus comprises a 2D image acquisition device and/or a 3D image acquisition device.

17. The warehousing system according to claim 15, wherein the control server is configured to generate, according to an identification result of the identification apparatus being exception, an exception handling instruction or issue an alarm signal.

18. The warehousing system according to claim 1 or 2, wherein the work station area is docked with a docking device, the docking device comprises a conveyor line, and the conveyor line is used for transferring a container to or out of a work station.

19. The warehousing system according to claim 1 or 2, wherein the work station area is provided with a picking workstation, and the picking workstation is configured to be used for placement of containers to be picked for picking.

20. The warehousing system according to claim 2, wherein the control server is further configured to update inventory information according to a container on which a picking operation has been performed being empty.

21. The warehousing system according to claim 2, wherein the control server is further configured to update, according to goods remaining in a container on which a picking operation has been performed, the number of goods in the container in current inventory information to a surplus, so as to update inventory information.

22. The warehousing system according to claim 7 or 8, wherein the inventory area comprises a first area and a second area, a maximum distance from the first area to the work station area is not greater than a first predetermined distance, and a minimum distance from the second area to the work station area is greater than the first predetermined distance;
the control server is configured to acquire a future order and hit at least one of the containers according to the future order, wherein the container that has been hit is denoted as a hit container and a movable carrier storing the hit container is denoted as a hit carrier;
the carrier carrying device is configured to carry at least one first movable carrier and at least one second movable carrier that are parked in the inventory area to the same work station area, wherein at least the second movable carrier is a hit carrier;
the fixed container carrying device is configured to place at least one hit container on the at least one second movable carrier onto at least one first movable carrier, wherein the first movable carrier having the hit container placed from the second movable carrier is denoted as a goods-sorted carrier, and the first movable carrier is a target carrier; and
the carrier carrying device is configured to carry at least one goods-sorted carrier back to the first area.

23. The warehousing system according to claim 22, wherein the carrier carrying device is configured to carry at least one first movable carrier and at least one second movable carrier parked in the inventory area to the same work station area during non-production time of the work station area; and
the fixed container carrying device is configured to place at least one hit container on the at least one second movable carrier onto at least one first movable carrier.

24. The warehousing system according to claim 22, wherein the carrier carrying device for carrying the at least one goods-sorted carrier back to the first area is specifically configured to:
carry, when there is a vacant parking position in the first area, the goods-sorted carrier back to the first area; and
carry, when there is no vacant parking position in the first area, a non-goods-sorted carrier in the first area to the second area, and then carry the goods-sorted carrier to the first area.

25. The warehousing system according to claim 22, wherein the future order comprises:
an order for generating a production task for a next production period; and/or
an estimated order.

26. The warehousing system according to claim 25, wherein the hit container comprises the container storing hit goods and/or the container storing goods associated with the hit goods, the hit goods being goods contained in an SKU of the future order.

27. The warehousing system according to claim 26, wherein the control server is configured to determine, according to historical orders, the goods associated with the hit goods.

28. The warehousing system according to claim 25, wherein the control server is configured to distribute all received orders for generating the production task to the work station area in batches.

29. The warehousing system according to claim 25, wherein the control server is configured to estimate orders according to historical orders and/or popularity of the goods.

30. The warehousing system according to claim 22, wherein the first movable carrier is a vacant movable carrier or a hit carrier.

31. The warehousing system according to claim 22, wherein the control server is configured to cause each of the movable carriers to always retain at least one vacant placement position.

32. The warehousing system according to claim 31, wherein the movable carrier comprises a plurality of carrier surfaces, and the control server is configured to cause each carrier surface of each movable carrier to always retain at least one vacant placement position.

33. The warehousing system according to claim 22, wherein the fixed container carrying device is configured to place the hit container that is on the at least one second movable carrier onto at least one first movable carrier such that all containers on the at least one first movable carrier are hit containers.

34. The warehousing system according to any one of claims 22 to 33, wherein the work station area further comprises a temporary storage position, the temporary storage position is used for placement of the containers, and the fixed container carrying device is configured to at least transfer the containers between the placement position and the temporary storage position.

35. The warehousing system according to claim 34, wherein the work station area further comprises:
a support frame; and
at least one guide mechanism, which is arranged onto the support frame, the guide mechanism being transversely movable and vertically movable relative to the support frame,
wherein a container taking and placing apparatus is arranged onto the guide mechanism, and the temporary storage position is arranged onto the support frame.

36. The warehousing system according to claim 35, wherein the guide mechanism comprises:
a transverse moving apparatus, which is arranged onto the support frame, the transverse moving apparatus being coupled to a control apparatus and transversely movable relative to the support frame, wherein the control apparatus is coupled to the work station area and the carrier carrying device to control working of the work station area and the carrier carrying device;
a moving rod, which is extended in a vertical direction, the moving rod being arranged onto the transverse moving apparatus such that the moving rod is transversely movable relative to the support frame; and
a vertical moving apparatus, which is arranged onto the moving rod, the vertical moving apparatus being coupled to the control apparatus and vertically movable relative to the moving rod,
wherein the container taking and placing apparatus is arranged onto the vertical moving apparatus.

37. The warehousing system according to claim 34, wherein the carrier carrying device is configured to first carry one selected from the first movable carrier and the second movable carrier to said same work station area;
the fixed container carrying device is configured to place, to the temporary storage position, the container thereon to be exchanged to the other selected from the first movable carrier and the second movable carrier;
the carrier carrying device is configured to carry the one selected from the first movable carrier and the second movable carrier back to the inventory area;
the carrier carrying device is configured to carry the other selected from the first movable carrier and the second movable carrier to said same work station area; and
the fixed container carrying device is configured to place, thereon from the temporary storage position, the container to be exchanged thereto.

38. A control method for a warehousing system, the warehousing system being the warehousing system according to any one of claims 1 to 37, wherein the control method comprises the following steps:
generating, by the control server, a goods sorting instruction, and sending, by the control server, the goods sorting instruction to the carrying device; and
carrying, by the carrying device according to the goods sorting instruction, at least two containers which have order relevance and are stored on different carriers to a same target carrier.

39. The control method according to claim 38, further comprising the following steps:
generating, by the control server, an order picking instruction and sending, by the control server, the order picking instruction to the carrying device, wherein the order picking instruction comprises at least two containers on the target carrier that have been performed with goods sorting; and
taking out, by the carrying device according to the order picking instruction, at least two containers on the target carrier and placing, by the carrying device, the containers in the work station area.

40. The control method according to claim 39, wherein when the carrier is a movable carrier, the carrying, by the carrying device according to the goods sorting instruction, at least two containers which have order relevance and are stored on different carriers to a same target carrier comprises:
carrying, by a carrier carrying device according to the goods sorting instruction, current carriers storing at least two containers respectively and a target carrier from the inventory area to the work station area;
arranging a fixed container carrying device in the work station area, taking out, by the fixed container carrying device according to the goods sorting instruction, at least two containers from current carriers where they are respectively located, and placing, by the fixed container carrying device, the containers onto the target carrier; and/or
taking out, by the fixed container carrying device according to the order picking instruction, at least two containers from the target carrier for picking.

41. The control method according to claim 39, wherein when the carrier is a movable carrier, the carrying, by the carrying device according to the goods sorting instruction, at least two containers which have order relevance and are stored on different carriers to a same target carrier comprises:
carrying, by a carrier carrying device according to the goods sorting instruction, current carriers storing at least two containers respectively from the inventory area to the work station area;
arranging a fixed container carrying device in the work station area, selecting, by the fixed container carrying device according to the goods sorting instruction, one current carrier as a target carrier, taking out, by the fixed container carrying device, containers on the remaining current carriers, and placing, by the fixed container carrying device, the containers onto the target carrier; and/or
taking out, by the fixed container carrying device according to the order picking instruction, at least two containers from the target carrier for picking.

42. The control method according to claim 40 or 41, wherein the inventory area comprises a first area and a second area, a maximum distance from the first area to the work station area is not greater than a first predetermined distance, and a minimum distance from the second area to the work station area is greater than the first predetermined distance;
the warehousing system is configured to implement the following steps:
acquiring a future order;
hitting at least one of the containers according to the future order, wherein the container that has been hit is denoted as a hit container and a movable carrier storing the hit container is denoted as a hit carrier;
carrying at least one first movable carrier and at least one second movable carrier that are parked in the inventory area to the same work station area, wherein at least the second movable carrier is a hit carrier;
placing, in the work station area, at least one hit container on the at least one second movable carrier onto at least one first movable carrier, wherein the first movable carrier having the hit container placed from the second movable carrier is denoted as a goods-sorted carrier; and
carrying at least one goods-sorted carrier back to the first area.

43. The control method according to claim 42, wherein the carrying at least one first movable carrier and at least one second movable carrier that are parked in the inventory area to the same work station area, placing, in the work station area, at least one hit container on the at least one second movable carrier onto at least one first movable carrier and carrying at least one goods-sorted carrier back to the first area comprises:
S120: carrying one first movable carrier and one second movable carrier that are parked in the inventory area to said same work station area, and then performing step S130, wherein the second movable carrier is a hit carrier, and neither the first movable carrier nor the second movable carrier is a goods-sorted carrier;
S130: placing hit containers on the second movable carrier onto the first movable carrier, and then performing step S140;
S140: determining whether there is a hit container remaining on the second movable carrier, if yes, performing step S 150, and if no, performing step S 170;
S150: determining whether the first movable carrier still receives the new hit container, if yes, performing step S130, and if no, performing step S 160;
S160: carrying the first movable carrier back to the inventory area, and then performing step S200;
S170: carrying the second movable carrier back to the inventory area, and then performing step S180;
S180: determining whether there is a hit carrier among non-goods-sorted carriers in the inventory area, if yes, performing step S 190, and if no, performing step S220;
S190: carrying one hit carrier among the non-goods-sorted carriers in the inventory area to said same work station area, taking the hit carrier as the second movable carrier, and then performing step S130;
S200: determining whether there is a hit carrier among the non-goods-sorted carriers in the inventory area, if yes, performing step S210, and if no, performing step S220;
S210: carrying one hit carrier or one vacant movable carrier among the non-goods-sorted carriers in the inventory area to said same work station area, taking the carrier as the first movable carrier, and then performing step S130; and
S220: carrying the movable carrier at said same work station area back to the inventory area.

44. The control method according to claim 43, wherein in at least one selected from step S120, step S190, and step S210, the warehousing system is configured to:
calculate a container index of each hit container on the non-goods-sorted carriers among the hit carriers in the inventory area, and determine, according to the container index, the non-goods-sorted carriers carried to said same work station area, wherein the container index is the number of future orders that hit the containers among all the future orders.

45. The control method according to claim 44, wherein in at least one selected from step S120, step S190, and step S210, the warehousing system is configured to:
calculate a carrier index of each non-goods-sorted carrier among the hit carriers parked in the inventory area, and take the non-goods-sorted carrier with the maximum carrier index as the first movable carrier or the second movable carrier, wherein the carrier index is a sum of the container indexes of all the hit containers on the hit carriers; or
take the non-goods-sorted carrier placed with the hit container with the maximum container index among the non-goods-sorted carriers among the hit carriers parked in the inventory area as the first movable carrier or the second movable carrier.

46. The control method according to claim 43, wherein in step S 120,
a control apparatus first determines said same work station area, wherein the control apparatus is coupled to the work station area and the carrier carrying device to control working of the work station area and the carrier carrying device; and
when there are at least three non-goods-sorted carriers among the hit carriers parked in the inventory area, two non-goods-sorted carriers with a minimum moving path of moving to said same work station area are moved to said same work station area.

47. The control method according to claim 43, wherein in step S 120,
a control apparatus first determines two movable carriers to be carried from the inventory area, wherein the control apparatus is coupled to the work station area and the carrier carrying device to control working of the work station area and the carrier carrying device; and
when a plurality of work station areas are free, the control apparatus respectively calculates a sum of lengths of moving paths in which the two movable carriers to be carried from the inventory area are moved to each of the plurality of free work station areas, and takes the work station area with the minimum sum of lengths of the moving paths as said same work station area.

48. The control method according to claim 43, wherein
the future order is an order to be processed in a next production period, the first movable carrier is a hit carrier, and
in step S130, the warehousing system is configured to determine the work station area associated with the first movable carrier in the next production period, and preferentially exchange a hit container that is on the second movable carrier and is associated with the work station area associated with the first movable carrier to the first movable carrier.

49. The control method according to claim 48, wherein
the future order is an order to be processed in the next production period, and the first movable carrier is a hit carrier, and
in step S130, the warehousing system is configured to determine the future order associated with the first movable carrier in the next production period, and preferentially exchange a hit container that is on the second movable carrier and is associated with the future order associated with the first movable carrier to the first movable carrier.

50. The control method according to claim 43, wherein
the movable carrier comprises a plurality of carrier surfaces, and the warehousing system is configured to cause each carrier surface of each movable carrier to always retain at least one vacant placement position;
in step S130, the placing hit containers on the second movable carrier onto the first movable carrier comprises:
placing the hit containers on the second movable carrier onto the first movable carrier when each of the carrier surfaces of the first movable carrier has a vacant placement position and at least one of the carrier surfaces of the first movable carrier has a plurality of vacant placement positions;
or
exchanging non-hit containers on the first movable carrier with the hit containers on the second movable carrier when each of the carrier surfaces of the first movable carrier has only one vacant placement position;
in step S150, the determining whether the first movable carrier still receives the new hit container comprises:
determining whether there is a non-hit container remaining on the first movable carrier or whether there are a plurality of vacant placement positions on at least one of the carrier surfaces of the first movable carrier.

51. The control method according to claim 43, wherein
in step S130, the placing hit containers on the second movable carrier onto the first movable carrier comprises:
placing the hit containers on the second movable carrier onto the first movable carrier when the first movable carrier has a vacant placement position;
or
exchanging non-hit containers on the first movable carrier with the hit containers on the second movable carrier when the first movable carrier has no vacant placement position; and
in step S150, the determining whether the first movable carrier still receives the new hit container comprises:
determining whether there is a non-hit container remaining on the first movable carrier or whether there is a vacant placement position on the first movable carrier.
